# EUROPEAN PATENT APPLICATION

(11) **EP 2 881 398 A1**
(43) Date of publication of application: **10.06.2015**
(21) Application number: 13306667.0
(22) Date of filing: 04.12.2013
(51) Int. Cl.: C07F 5/02, C07F 5/04

(54) **Method for preparing aminoarylborane compounds or derivatives thereof**

(71) Applicant: Université de Bordeaux I, 33405 Talence Cedex (FR); Institut Polytechnique de Bordeaux, 33402 Talence Cedex (FR)
(72) Inventor: Pucheault, Mathieu Jonathan Damien, 33360 Camblanes et Meynac (FR); Vaultier, Michel, 35410 Chateaugiron (FR); Marciasini, Ludovic Daniel Alain, 33400 Talence (FR); Guerrand, Hélène, Denise, Suzanne, 33600 Pessac (FR)
(74) Representative: Grosset-Fournier, Chantal Catherine

(57) **Abstract**

The present invention provides a process for the preparation of aminoarylborane compounds and derivatives thereof comprising a step of arylation by reacting an aryl chloride with an aminoborane compound in the presence of a catalytic system.
Typically, the transformation comprises, converting Aryl-chloride Ar-Cl with an aminoborane such as 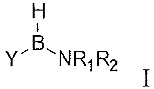 into an aminoarylborane compound of the following formula:

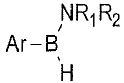

## Description

### Field of the Invention

The present invention relates to a process for the preparation of aminoarylborane compounds and derivatives thereof.

### Description of the Related Art

The creation of a carbon-boron bond and its subsequent transformation have proved to be a powerful tool in organic synthesis. Thus, boron derivatives are considered as key intermediates in organic synthesis. Moreover, boron derivatives are usually little toxic making them even more attractive, in particular for the green industry. A major obstacle to a widespread use of boron derivatives is their cost price which can be prohibitive. Indeed, known methods for preparing said compounds require reagents often expensive and specific conditions making it difficult to carry out scale up in industry.

Aryl borane derivatives, such as arylboronic acids and esters, can be prepared by borylation of organomagnesium or organolithium derivatives. The reaction consists in a condensation of an aromatic organometallic reagent with a borate derivative. These reactions must be carried out at cryogenic temperature (usually below -60°C) to avoid side reactions and undesired products. Such conditions are difficult to handle, especially on a large scale and final products when obtained, have to be separated and purified which is cost and time consuming. Moreover, the chemoselectivity of these reactions is limited because of the limited compatibility between numerous functional groups and organometallic reagents.

WO 2001064688 describes the borylation of aromatic or cyclic hydrocarbons by C-H bonds activation catalyzed by rhodium organometallic complexes. Alternative methods have been developed to avoid the implementation of organometallics at very low temperatures. These methods involve palladium activation of carbon-halide bond (Miyaura borylation), (US 20040024237 A1) or iridium activation of Aryl-H (Hartwig borylation), (US 20060281939 A1).

These methods consist for example in reacting tetra alkoxydiboron compounds, (T. Ishiyama et al., J. Org. Chem., 1995, 60, 7508), pinacolborane (M. Murata et al., J. Org. Chem., 1997, 62, 6458) or aminoborane compounds (diisopropylaminoborane, iPr₂N-BH₂, WO 03/053981 A1) with brominated or iodinated aromatic derivatives, in the presence of palladium catalysts.

These methods do not involve organomagnesium or organolithium compounds but brominated and iodinated derivatives which remain expensive. Further, the existing reagents do not allow the synthesis of a large spectrum of borane derivatives and the yields can be very low. Furthermore, half of the boron starting material is lost when pinacolatodiboron is used as a reagent.

There is therefore a need to develop less expensive and easier to implement methods allowing the synthesis of a less restricted number of stable boronic compounds, in particular in a large scale, with a good yield.

The aim of present invention is to provide a method which palliates the problems cited above.

### Brief summary of the invention

The present invention provides a new and easy process for preparing aminoarylboranes and ultimately arylboranes compounds which can be implemented in a large scale, , with good yields. The present invention also provides an improved process for the preparation of aminoarylborane compounds, more environment friendly, by reducing the cost and the use of dangerous or difficult to handle reagents.

### DETAILED DESCRIPTION OF THE INVENTION

Unexpectedly, the inventors succeeded in using an aryl chloride compound for the implementation of a borylation process involving an arylation reaction in the presence of a catalytic system, leading to an aminoarylborane compound or a derivative thereof.

In a general aspect, the invention provides a borylation process involving an arylation reaction of an aminoborane by using an aryl chloride compound in the presence of a catalytic system, leading to an aminoarylborane compound or a derivative thereof.

In an advantageous embodiment, said arylation reaction involves the use of an aryl chloride compound, an aminoborane compound and a halide salt in the presence of a catalytic system leading to an arylborane compound.

In another advantageous embodiment, the arylation process involves the use of an aryl chloride compound, an aminoborane compound, a halide salt in the presence of a catalytic system and a base leading to an arylborane compound.

In another even more advantageous embodiment, the arylation process involves the use of an aryl chloride compound, an aminoborane compound, a halide salt, in the presence of a catalytic system and a base in a reaction medium containing an aprotic polar solvent.

In a first aspect, the invention provides a use of an aryl chloride compound and of an aminoborane compound in the presence of a catalytic system, for the implementation of a process involving an arylation reaction leading to an aminoarylborane compound or a derivative thereof.

The inventors discovered that it was possible to implement a process, in particular a borylation process, for the preparation of an arylborane compound, or a derivative thereof, which comprises a step of arylation by reacting an aryl chloride with an aminoborane compound in the presence of a catalytic system, in a reaction medium containing a solvent.

In a particular embodiment, the use according to the invention comprised a step of arylation in the presence of a catalytic system and/or a base and in the absence of halide salt.

As a second aspect, the present invention provides a process for the preparation of an aminoarylborane compound, or a derivative thereof, which comprises a step of arylation by reacting an aryl chloride with an aminoborane compound in the presence of a catalytic system, in a reaction medium containing a solvent, to obtain an aminoarylborane compound, optionally isolated and purified, an optional step of converting the aminoarylborane compound by refunctionalisation into an arylborane derivative.

In an advantageous embodiment, the present invention provides a process for the preparation of an aminoarylborane compound, or a derivative thereof, which comprises a step of arylation by reacting an aryl chloride with an aminoborane compound in the presence of a catalytic system allowing a carbone-chloride (C-Cl) bond and Boron-Nitrogen (B-H) bond activation.

In a preferred embodiment, the step (1) of arylation is a step of arylation implemented in the presence of a catalytic system, in a reaction medium containing an apolar and aprotic solvent, at least a halide salt and/or at least a base, at a temperature of 20°C.

In another preferred embodiment, the process or the use according to the invention comprises a step (1) of arylation in the presence of a catalytic system, in a reaction medium containing a polar and aprotic solvent, and at least one base, preferably an inorganic base, and more preferably at least one organic base.

Inventors discovered that conditions of arylation of an aminoborane compound using an aryl bromide or iodine do not apply to arylation of an aminoborane compound using an aryl chloride.

Further, it was not obvious to transpose the experimental conditions of borylation of an aryl-chloride using pinacolborane (a dialkoxyborane with one BH bond) to an aminoborane, due to the fact that aminoborane compounds used in the reaction are weaker Lewis acids than pinacolborane and furthermore bear two BH bonds.

Thus, catalytic system usually used in prior art for implementing an arylation reaction of an aminoborane compound with aryl bromine or iodine does not apply to aryl chloride. Furthermore, it was not obvious to identify experimental conditions under which both C-C1 bond of the aryl chloride and a BH bond of the aminoborane would be activated during the same catalytic cycle.

The inventors identified such experimental conditions allowing arylation of an aminoborane compound using an aryl chloride compound.

The present invention provides a process according to the above, wherein said catalytic system is optionally under the form of a preformed complex and comprises :
- at least a transition metal, in particular a transition metal selected from the group comprising Pd, Cu, Fe, Ni, and Pt, and
- at least a ligand, in particular a ligand selected from the group comprising a trialkylphosphine, a dialkylarylphosphine, more particularly an alkylbiarylphosphine, a C-based ligand, more particularly a N-heterocyclic carbene, and a N-based ligand, more particularly an oxime ligand.

In an advantageous embodiment, said catalytic system comprises a transition metal derivative or salt selected from PdCl₂, PdI₂, PdBr₂ Pd(OAc)₂ and a ligand XPhos, CPhos, DAL-Phos or Sphos, NHC carbene catalytic system, acetophenone oxime.

In more advantageous embodiment said catalytic system comprises a metal derivative or salt selected from PdCl₂, PdI₂, PdBr₂ Pd(OAc)₂ and a ligand NHC carbene catalytic system, acetophenone oxime.

In an even more advantageous embodiment said catalytic system comprises Pd(OAc)₂ and XPhos as a ligand.

In another embodiment, the process provided is a process according to any one of the above process wherein the arylation reaction is conducted in presence of a halide salt, in particular a halide salt selected from the group comprising KI, NaI, CsI, KBr, NaBr, CsBr, KCl, NaCl, CsCl, more particularly KI and NaI, or a mixture thereof.

The process provided is a process according to any one of the above wherein the arylation reaction further comprises a halide salt, in particular a halide salt selected from the group comprising KI, NaI, CsI, KBr, NaBr, CsBr, KCl, NaCl, CsCl, more particularly KI and NaI, or a mixture thereof.

In an advantageous embodiment the halide salt is KI.

Advantageously, the addition of a catalytic amount of halide salt improves the arylation reaction yield implemented in the present process according to the invention.

A catalytic amount of halide salt means an amount of halide salt improving the arylation reaction of an aminoborane.

In an advantageous embodiment, the process provided is a process according to any one of the above wherein the amount of halide salt is comprised from 0.001 % to 50 %, in particular from 0.01 % to 20 %, and even more particularly from 0.1% to 20% or from 0.1% to 5% expressed as a percentage of the number of moles of the aryl chloride (molar percentage) in the arylation reaction.

In a particular embodiment, the process provided is a process according to any of the above, wherein the arylation reaction is conducted in the absence of halide salt. In the absence of halide salt means that no halide salt is added into the reaction medium. "In the absence of halide salt" means less than 0.0001 % of halide salt or undetectable amount of halide salt is present in the reaction medium.

Detection may be performed as known in the art for example by a method described in Thirumurthy Velpandian, Jayabalan Nirmal, Beauty Arora, Alok Kumar Ravi & Ankita Kotnala Understanding the Charge Issues in Mono and di-Quaternary Ammonium Compounds for Their Determination by LC/ESI-MS/MS. Analytical Letter. Volume 45, Issue 16, 2012. Pages 2367-2376.

In yet another embodiment, the process provided is a process according to any one of the above, for the preparation of
■ an aminoarylborane compound of the following formula: 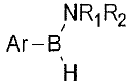 wherein:
   - H is a hydrogen atom
   - B is a boron atom
   - Ar is an aryl group which is optionally substituted, in particular a heteroaryl group containing one or several heteroatom(s) selected from O, N or S,
   - NR¹R² is an amino group, wherein R¹ and R², are identical or different, selected from the group comprising:
      - a hydrogen atom,
      - an optionally substituted hydrocarbon group, in particular
      - a linear alkyl group having from 1 to 20 carbon atoms,
      - a branched alkyl group having from 3 to 20 carbon atoms,
      - a cycloalkyl group having from 3 to 20 carbon atoms,
      - an alkylaryl group, in particular a benzyl group, optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, and/or optionally substituted on the benzylic carbon by an alkyl group, more specifically a methyl group, this carbon being eventually chiral.
      - an aryl group which is optionally substituted, in particular a phenyl group optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms,
      R¹ and R² optionally form an alkylene group corresponding to the formula CR³R⁴-(CH₂)ₙ-CR⁵R⁶, in which n is ranging from 0 to 4, and R³ to R⁶ are selected independently of one another, from hydrogen and alkyl groups having from 1 to 20 carbon atoms, in particular said alkylene being 1,1,5,5-tetramethylpentylene, the carbon atom in R¹ and/or R² linked to the nitrogen atom in -NR¹R² is optionally substituted by an alkyl group having from 1 to 10 carbon atoms, in particular by a methyl group, said carbon atom being optionally chiral,
■ an arylboronic acid compound of the following formula 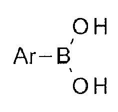 wherein Ar and B are as defined above, OH is a hydroxyl group,
■ a dialkoxyarylborane compound of the following formula 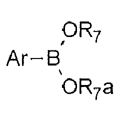 wherein Ar and B are as defined above,
   - OR⁷ and -OR^{7a} are identical or different, each represents an alkoxy group, wherein R⁷ and R⁷², identical or different, each represents:
      - a hydrogen atom,
      - an optionally substituted hydrocarbon group, in particular
      - a linear alkyl group having from 1 to 20 carbon atoms,
      - a branched alkyl group having from 3 to 20 carbon atoms,
      - a cycloalkyl group having from 3 to 20 carbon atoms,
      - an alkylaryl group, in particular a benzyl group, optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, and/or optionally substituted on the benzylic carbon by an alkyl group, more specifically a methyl group, this carbon being eventually chiral.
      - an aryl group which is optionally substituted, in particular a phenyl group optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms,
      the alkoxy groups -OR⁷ and -OR^{7a} are optionally connected to form a ring including the boron atom and the two oxygen atoms, and more particularly a 5 to 7 membered ring derived from (or comprising a dialkoxy moiety of the diol selected from) ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol), 2,2,-dimethylpropane-1,3-diol, the carbon atom of -OR⁷, and /or -OR^{7a} linked to the oxygen atom is optionally substituted by an alkyl group having from 1 to 10 carbon atoms, in particular by a methyl group, said carbon atom being optionally chiral,
■ an alkoxyaminoarylborane compound of following formula 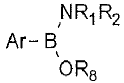 wherein Ar and B are as defined above,
   - -NR¹R² is an amino group, R¹ and R² have the above mentioned meanings,
   - -OR⁸ is an alkoxy group and R⁸ has the above mentioned meanings for R⁷
   the alkoxy group -OR⁸ and the amino group -NR¹NR² are optionally connected to form a ring including the boron atom, and more particularly a 5 to 7 membered ring, and more particularly an oxazaborolidine ring.
   the carbon atom linked to the oxygen atom in -OR⁸ and /or to the nitrogen atom in NR¹R² is optionally substituted by an alkyl group having from 1 to 10 carbon atoms, in particular by a methyl group, said carbon atom being optionally chiral,
■ a diaminoarylborane compound of following formula 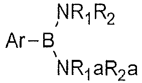 wherein Ar and B are as defined above,
   NR¹R² and NR^{1a} R^{2a} is an amino group, R¹ and R² have the above mentioned meanings, R^{1a} has the same meaning as R^{1,} R^{2a} has the same meaning as R² and R¹, R², R^{1a}, R^{2a} are identical or different from one or from other(s),
   the amino groups -NR¹NR² and NR^{1a} R^{2a} are optionally connected to form a ring including the boron atom, or a derivative thereof,
   said compound is in particular an aminoarylborane or a cyclic diaminoarylborane or a derivative thereof.

In an embodiment, the process provided is a process according to any one of the above comprising a step of contacting an aryl chloride of formula Ar-Cl with an aminoborane compound, wherein Cl is a chlorine atom,
Ar is an aryl group which is optionally substituted, an heteroaryl group optionally substituted containing one or several heteroatom (s) selected from N, O or S, more particularly an aryl group or a heteroaryl group group which is optionally substituted, selected from the group comprising a phenyl, a naphtalenyl, an anthracenyl, a phenanthrenyl, a biphenyl group, a pyridine, pyrazine, imidazole, pyrazole, oxazole, isoquinoline, thiophene, benzothiophene, furane, benzofurane, isoindole, benzoxazole, benzodioxole, chromanone.

In an advantageous embodiment the following aryl choride are preferred

The following substituted aryl chlorides are preferred:

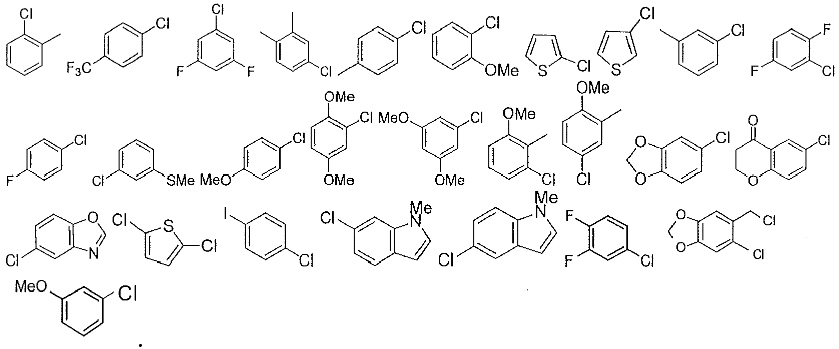

In a preferred embodiment, each group, when substituted, is carrying one or several identical or different substituent(s), also defined as "R" selected from the group comprising:
□ - a halogen atom selected from - F, -Cl, -Br or -I,
□ -SO₂-NH₂, or a salt thereof,
□ -SO₂-R⁹, or -SO₃-R⁹ wherein R⁹, represents
   - a hydrogen atom,
   - an optionally substituted hydrocarbon group, in particular
   - a linear alkyl group having from 1 to 20 carbon atoms,
   - a branched alkyl group having from 3 to 20 carbon atoms,
   - a cycloalkyl group having from 3 to 20 carbon atoms,
      substituted by one or several substituent (s) selected from halogen, hydroxyl, alkyl group having from 1 to 10 carbon atoms, in particular from 1 to 5 carbon atoms, alkoxy group having from 1 to 10 carbon atoms, in particular from 1 to 5 carbon atoms,
   - an alkylaryl group, in particular a benzyl group, optionally substituted on the aromatic ring by one or several substituent (s) selected from halogen, hydroxyl, alkyl group having from 1 to 10 carbon atoms, in particular from 1 to 5 carbon atoms, alkoxy group having from 1 to 10 carbon atoms, in particular from 1 to 5 carbon atoms,
      and/or optionally substituted on the benzylic carbon by an alkyl group, more specifically a methyl group, this carbon being eventually chiral.
   - an aryl group which is optionally substituted, in particular a phenyl group optionally substituted on the aromatic ring by one or several substituent (s) selected from halogen, alkyl group having from 1 to 10 carbon atoms, in particular from 1 to 5 carbon atoms, alkoxy group having from 1 to 10 carbon atoms, in particular from 1 to 5 carbon atoms,
      □ -NO₂,
      □ -CF₃,
      □ -CN,
      □ -R¹⁰, wherein R¹⁰ has the same meanings as R⁹,
      □ -OR¹¹, wherein R¹¹ has the same meaning as R⁹,
      □ -OSi^{t}BuPh₂,
      □ -OSi^{t}BuMe₂,
      □ -SR¹², wherein R¹² has the same meaning as R⁹,
      □ -COOH, or -CO-NH₂ or a salt thereof,
      □ -COOR¹³, wherein R¹³ has the same meaning as R⁹
      □ -CO-NR¹⁴R^{14a}, wherein R¹⁴ and R^{14a} are identical or different and have the same meaning as R¹ and R², the carbon atom in R¹⁴ and/or R^{14a} linked to the nitrogen atom, is optionally substituted by an alkyl group having from 1 to 10 carbon atoms, in particular by a methyl group, said carbon atom being optionally chiral,
      □ -NR¹⁵R^{15a} or a salt thereof, wherein R¹⁵ and R^{15a} are identical of different and have the same meaning as R¹ and R² the carbon atom in R¹⁵ and/or R^{15a} linked to the nitrogen atom, is optionally substituted by an alkyl group having from 1 to 10 carbon atoms, in particular by a methyl group, said carbon atom being optionally chiral,
      □ -SiR¹⁶₃, wherein R¹⁶ has the same meaning as R⁹,
      □ a borylated group in which B is a boron atom (oxidation state III) B(III), said group being in particular a dialkoxyboryl group of formula: 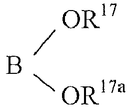 wherein OR¹⁷ and OR^{17a} represents an alkyloxy group or an acetoxy group,
         R¹⁷ and R^{17a}, are identical or different, each represents:
         - a hydrogen atom,
         - an optionally substituted hydrocarbon group, in particular
         - a linear alkyl group having from 1 to 20 carbon atoms,
         - a branched alkyl group having from 3 to 20 carbon atoms,
         - a cycloalkyl group having from 3 to 20 carbon atoms,
         - an alkylaryl group, in particular a benzyl group, optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, and/or optionally substituted on the benzylic carbon by an alkyl group, more specifically a methyl group, this carbon being eventually chiral.
         - an aryl group which is optionally substituted, in particular a phenyl group optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms,
         the carbon atom in OR¹⁷ and/or OR^{17a} linked to the oxygen atom, is optionally substituted by an alkyl group having from 1 to 10 carbon atoms, in particular by a methyl group, said carbon(s) atom being optionally chiral,
         the alkoxy groups -OR¹⁷ and -R^{17a} are optionally connected and form a ring including the boron atom and the two oxygen atoms, in particular a 5 to 7 membered ring derived from (or comprising a dialkoxy moiety of the diol selected from) a diol selected from ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol,
      □ a borylated group wherein B is boron atom (oxidation state IV) of formula B(IV), in particular:
         ■ a trifluoroborate group,
         ■ a trialkylborate group, -B(OR^{a})₃, wherein R^{a} is an alkyl group having from 1 to 10 carbon atoms, (OR^{a})₃ is optionally forming a bicyclic system including the boron atom and the three oxygen atoms, representing a trialkoxy moiety of a triol selected from the group comprising 1,2,3-propane triol (glycerol) or 1,1,1-tris(hydroxymethyl)ethane (2-(hydroxymethyl)-2-methyl-1,3-propanediol),
         ■ a boratrane group, in particular a borotrane group wherein a N,N-bis(hydroxyalkyl)alkylamine derivative of formula HO-R^{b}-NR^{c}-R^{b'}-OH forms a ring with the boron atom.
            R^{b} and R^{b'}, are identical or different, each represents a linear alkylene group having 2 or 3 carbon atoms, or branched alkylene group having from 3 to 5 carbon atoms,
            R^{c} is a hydrogen atom or an alkyl group having 1 to 4 carbon atoms,
            in particular a N,N-bis(hydroxyalkyl)alkylamine group of formula HO-R^{b}-NR^{c}-R^{b'}-OH forming a [4,0,4], or [4,0,5] or [5,0,5] bicyclic boratrane heterocycle with the boron atom,
            wherein R^{b} and R^{b'}, are identical or different, each represents a linear alkylene group having 2 or 3 carbon atoms, or branched alkylene group having from 3 to 5 carbon atoms,
            R^{c} is a hydrogen atom or an alkyl group having 1 to 4 carbon atoms.
         ■ a methyliminodiacetic acid (MIDA) borate group of the following formula 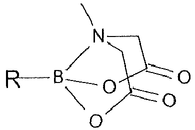
         or R-MIDA wherein R is hydrogen or an optionally substituted hydrocarbon group,

Examples of R-MIDA groups are described in Lee, S. J. et al. J. Am. Chem. Soc. 2008, 130, 466. Knapp DM, Gillis EP, Burke MD. J. Am. Chem. Soc. 2009; 131:6961-6963 and in

Gillis EP, Burke MD. J. Am. Chem. Sco. 2007; 129:6716-6717, incorporated herein by reference.

Advantgeous substituents for Ar group (also defined as R) in Ar-Cl are halogen, in particular F, Cl, alkyl, in particular C₁₋₄ alkyl, and preferably, methyl, O-alkyl, and preferably O-Me, CF3, halogen preferably, F or Cl,
the aminoborane compound to be arylated is an aminoborane of the general following formula 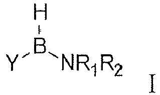 wherein
- H is a hydrogen atom,
- B is a boron atom,
- NR¹R² is an amino group, wherein
   R¹ and R², are identical or different, are as defined above :
   ■ Y represents:
      □ - a hydrogen atom,
      □ -NR^{1a}R^{2a},
      □ -R^{7a},
      □ -OR^{8a}, wherein
   R^{1a} and R^{2a} are identical or different, and each represents:
   - a hydrogen atom,
   - an optionally substituted hydrocarbon group, in particular
   - a linear alkyl group having from 1 to 20 carbon atoms,
   - a branched alkyl group having from 3 to 20 carbon atoms,
   - a cycloalkyl group having from 3 to 20 carbon atoms,
   - an alkylaryl group, in particular a benzyl group, optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms,
      and/or optionally substituted on the benzylic carbon by an alkyl group, more specifically a methyl group, this carbon being eventually chiral,
      In a particular embodiment, the benzyl group is optionally substituted on the benzylic carbon, by one or several substituent (s) selected from the group comprising, alkyl group having from 1 to 10 carbon atoms, , in particular from 1 to 5 carbon atoms, alkoxy group having from 1 to 10 carbon atoms, in particular from 1 to 5 carbon atoms,
   - an aryl group which is optionally substituted, in particular a phenyl group optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms,
      R^{1a} and R^{2a} optionally form an alkylene group corresponding to the formula -CR³R⁴-(CH₂)ₙ-CR⁵R⁶, in which n is ranging from 0 to 4, and the R³ to R⁶ substituents are selected, independently of one another, from hydrogen and alkyl groups having from 1 to 20 carbon atoms, in particular said alkylene being 1,1,5,5-tetramethylpentylene,
      the carbon atom in R^{1a} and/or in R^{2a} linked to the nitrogen atom in -NR^{1a}R^{2a} is optionally substituted by an alkyl group having from 1 to 10 carbon atoms, in particular by a methyl group, said carbon(s) atom being optionally chiral,
   - R^{7a} represents
      - a hydrogen atom,
      - an optionally substituted hydrocarbon group, in particular
      - a linear alkyl group having from 1 to 20 carbon atoms,
      - a branched alkyl group having from 3 to 20 carbon atoms,
      - a cycloalkyl group having from 3 to 20 carbon atoms,
      - an alkylaryl group, in particular a benzyl group, optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, and/or optionally substituted on the benzylic carbon by an alkyl group, more specifically a methyl group, this carbon being eventually chiral.
      - an aryl group which is optionally substituted, in particular a phenyl group optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms,
      - -OR^{8a} represents an acetoxy group wherein R^{8a} has the same meaning as R^{7a},
      the carbon atom in -OR^{8a} linked to the oxygen atom, is optionally substituted by an alkyl group having from 1 to 10 carbon atoms, in
      particular by a methyl group, said carbon atom being optionally chiral, the carbon atom in R¹ and/or R² linked to the nitrogen atom
   and/or
   the carbon atom in R^{1a} and/or R^{2a} linked to the nitrogen atom,
   and/or
   the carbon atom in R^{8a} linked to the oxygen atom,
   is optionally substituted by an alkyl group having from 1 to 10 carbon atoms, in particular by a methyl group, said carbon(s) atom being optionally chiral,
   for the preparation of an aminoarylborane or an aminoheteroarylborane of following formula IV: 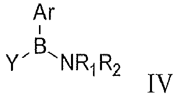 wherein Y , B, Ar and NR¹R² have the above mentioned meanings.

In an embodiment, the process provided is a process according to any one of the above comprising a step of reacting an aryl chloride of formula Ar-Cl, with an aminoborane compound wherein Ar is an aryl group, preferably a phenyl group, optionally substituted (R) with one or several substituents in particular with 1 to 3 substituents and more preferably with 2 or 3 substituents selected from the group comprising:
□ -R⁹,
□ -OR¹¹, wherein OR¹¹ is an alkoxy group or an acetoxy group,
□ - a halogen atom in particular F, Cl,
□ -OSi^{t}BuPh₂ of formula: 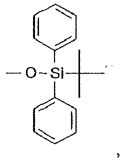
□ -OSi^{t}BuMe₂ of formula : 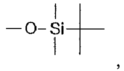
□ -SR¹², wherein -SR¹² is an alkylthio group,
□ -NR¹⁶R^{16a} or a salt thereof,
wherein,R⁹ R¹¹, R¹², R¹⁶R^{16a}, -OR¹¹, -NR¹⁶R^{16a} are as defined above.

In an embodiment, the process provided is process according to any one of the above, comprising a step of contacting an aryl chloride of formula Ar-Cl, with an aminoborane compound, in presence of a halide salt, wherein Ar is selected from the group comprising pyridine, pyrazine, imidazole, pyrazole, oxazole, isoquinoline, thiophene, benzothiophene, furane, benzofurane, isoindole, benzoxazole, benzodioxole, chromanone, optionally carrying at least one substituent as defined above for aryl groups.

In an advantageous embodiment Ar is selected from the group comprising a benzyl optionally substituted and a phenyl group optionally substituted, with one or several substituents, in particular one to 3 substituents and more preferably 2 or 3 substituents selected from the group comprising:
□NO₂,
□ alkyl group, in particular a C₁₋₁₀alkyl,
□-C₁₋₁₀alkoxy group of formula O-C₁₋₁₀,
□ Alkylthio group of formula S-C₁₋₁₀,
□ CF₃,
□ CN,
□ a halogen atom selected from - F, -Cl, -Br or -I,
□ an ester group of formula -COO-R¹³ wherein R¹³ has the same meaning as R⁹ above,
In an advantageous embodiment, Ar is a benzyl group which is also optionally substituted on the benzylic carbon, by one or several substituent (s) selected from the group comprising halogen, hydroxyl, alkyl group having from 1 to 10 carbon atoms, more specifically a methyl group, this carbon being eventually chiral, alkoxy group having from 1 to 10 carbon atoms,

In yet another embodiment, the process provided is a process according to the above embodiments implemented in the absence of halide salt.

In one aspect, the process according the invention is comprising a step of reacting an aryl chloride of formula Ar-Cl, with an aminoborane compound wherein Ar is an aryl group, is selected from the group comprising pyridine, pyrazine, imidazole, pyrazole, oxazole, isoquinoline, thiophene, benzothiophene, furane, benzofurane, isoindole, benzoxazole, benzodioxole, and chromanone, in particular from the group comprising a benzyl and a phenyl group, preferably a phenyl group, optionally substituted with one or several substituents in particular with one to 3 substituents and more preferably with 2 or 3 substituents selected from the group comprising:
□ NO₂,
□ -R⁹ in particular R⁹ is a C₁₋₁₀alkyl
□ -OR¹¹, wherein OR¹¹ is an alkoxy group or an acetoxy group, in particular an C₁₋₁₀ alkoxy group of formula O-C₁₋₁₀ ,
□ -OSi^{t}BuPh₂ of formula : 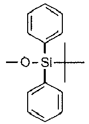
□ -OSi^{t}BuMe₂ of formula : 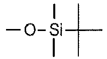
□ -SR¹², wherein -SR¹² is an alkylthio group of formula S-C₁₋₁₀,
   □ CF₃,
   □ CN,
   □ a halogen atom selected from - F, -Cl, -Br or -I
   □ an ester group of formula -COO-R¹³
□ -NR¹⁴R^{14a} or a salt thereof,
wherein,R⁹ , R¹¹, R¹², R¹³, R¹⁴, R^{14a}, -OR¹¹, -NR¹⁴R^{14a} are as defined above

In an embodiment, the process provided is a process according to any one of the above embodiment, wherein the solvent is aprotic and polar, in particular the solvent is selected from the group comprising cyclic etheroxides, in particular dioxanne or tetrahydrofuran (THF), or the group comprising dialkyl etheroxides, in particular, 2-methoxy-2-methylpropane (MTBE), diethylether, glymes, more particularly diglyme, or the esters group in particular methylacetate, ethylacetate, isopropylacetate, or the alkylnitrile group in particular acetonitrile, propionitrile, butyronitrile, or the amide group in particular dimethylacetamide (DMAc), N-methyl-2-pyrrolidone (NMP), or a mixture thereof, more particularly from methylacetate, ethylacetate, isopropylacetate, dioxanne or glymes, more particularly diglyme or a mixture thereof.

In an advantageous embodiment, the aprotic and polar solvent is selected from the group consisting of dioxanne, in particular distilled dioxanne, tetrahydrofuran, 2-methoxy-2-methylpropane, 2-methoxy-2-methylpropane, diglime, acetonitrile, dimethylacetamide, and a mixture thereof. In a more advantageous embodiment, the aprotic and polar solvent is selected from the group consisting of dioxanne, EtOAc, tBuOMe. In a even more advantageous embodiment, the aprotic and polar solvent is freshly distilled dioxanne or freshly distilled EtOAc.

In an embodiment, the process provided is a process according to any one of the above wherein the arylation reaction is conducted in presence of a base; the base may be organic and /or inorganic. One advantage of using a base is to improve the yield of the arylation reaction.

In another embodiment, the process provided is a process wherein the arylation reaction comprises at least one base, said base being organic or inorganic.

In a particular embodiment, the process provided is a process wherein the arylation reaction is conducted in presence of, or comprises, an organic base, in particular an organic base selected from the group comprising Et₃N, BuNMe₂, *i*Pr₂NEt, *i*Pr₂NH, pyridine. In a preferred embodiment the organic base is Et₃N, BuNMe₂, and more preferably Et₃N.

In another embodiment, the process provided is a process wherein the arylation reaction is conducted in presence of, or comprises, an inorganic base, in particular an inorganic base selected from the group comprising Na₂CO₃, NaOAc, K₂CO₃, Cs2CO3, KOAc. In an advantageous embodiment the inorganic base is Na₂CO₃, NaOAc, and more preferably Na₂CO₃.

In another embodiment, said base is selected from the group comprising Et₃N, BuNMe₂, *i*Pr₂NEt, *i*Pr₂NH, pyridine a mixture of organic bases, Na₂CO₃, NaOAc, K₂CO₃, Cs2CO3, KOAc, a mixture of inorganic bases.

In another general aspect the present invention relates to a process for the preparation of an aminoarylborane compound, or a derivative thereof, which comprises a step of arylation by reacting an aryl chloride with an aminoborane compound in the presence of a catalytic system, in a reaction medium containing a solvent, a halide salt, to obtain an aminoarylborane compound, isolated and purified, and a step of converting the aminoarylborane compound by refunctionalisation into an arylborane derivative, by treating said aminoarylborane compound by alcoholysis using a first alcohol, and then by a second alcohol such as a diol selected from the group comprising ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol and pinanediol for a step of transesterification that is followed by a step of purification.

In an embodiment, the process provided is a process according to any one of the above for the preparation of an aminoarylborane compound which comprises:
a step of reacting an aryl chloride Ar-Cl with an aminoborane compound of following formula II 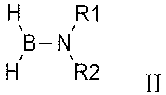 wherein Ar, B have the meanings mentioned above,
   and R¹ and/or R² is an *iso*propyl group and when R1 or R2 is an *iso*propyl group, the other R1 or R2 has the following meaning:
   - a hydrogen atom,
   - an optionally substituted hydrocarbon group in particular
   - a linear alkyl group having from 1 to 20 carbon atoms,
   - a branched alkyl group having from 3 to 20 carbon atoms,
   - a cycloalkyl group having from 3 to 20 carbon atoms,
   - an alkylaryl group, in particular a benzyl group, optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, and/or optionally substituted on the benzylic carbon by an alkyl group, more specifically a methyl group, this carbon being eventually chiral.
   - an aryl group which is optionally substituted, in particular a phenyl group optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, or any aryl group substituents,
   - R¹ and R² optionally form an alkylene group corresponding to the formula -CR³R⁴-(CH₂)ₙ-CR⁵R⁶, in which n is ranging from 0 to 4, and R³ to R⁶ are selected independently of one another, from hydrogen and alkyl groups having from 1 to 20 carbon atoms in particular said alkylene being 1,1,5,5-tetramethylpentylene,
   the carbon atom in R¹ and/or R² linked to the nitrogen atom is optionally substituted by an alkyl group having from 1 to 10 carbon atoms, in particular by a methyl group, said carbon atom being optionally chiral.

In an advantageous embodiment said process is a process for the preparation of an aminoarylborane compound of formula V, 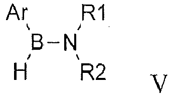 and comprises an optional step of isolation and purification of the aminoarylborane compound of formula V from the reaction medium, in particular in an aprotic and polar solvent selected from the group consisting of dioxane, EtOAc, and tBuOMe.

In another advantageous embodiment, said process is a process for the preparation of a diisopropylaminoarylborane comprising a step of reacting an aryl chloride with the diisopropylaminoborane of following formula II_{A} 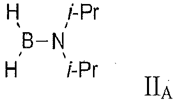 for the preparation of a diisopropylaminoarylborane compound of formula V_{A}, 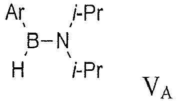 wherein Ar has the meanings mentioned according to the invention, *i*-Pr is isopropyl,
in an advantageous embodiment, the reaction medium comprises a solvent, in particular in dioxanne or Et₃N said process comprising a possible step of isolation and purification of the diisopropylaminoarylborane compound of formula V_{A} from the reaction medium.

In a more advantageous embodiment, said process for the preparation of a diisopropylaminoarylborane compound comprises a step of reacting an aryl chloride with a diisopropylaminoborane of following formula II_{A} 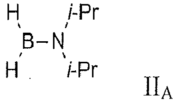 in a reaction medium containing a solvent, wherein the catalytic system is selected from the group comprising
the Pd(OAc)₂/XPhos catalytic system,
the PdCl₂/XPhos catalytic system,
the PdBr₂/XPhos catalytic system,
the PdI₂/XPhos catalytic system,
the Pd(OAc)₂/SPhos catalytic system,
the Pd(OAc)₂/DALPhos catalytic system,
a Pd(OAc)₂/NHC carbene catalytic system,
a Pd(OAc)₂/acetophenone oxime catalytic system or
a Pd (PCy₃)₂ precatalyst
a Pd(OAc)₂/ PCy₃ catalytic system
a Pd(OAc)₂/ AsPh₃ catalytic system,
for the preparation of a diisopropylaminoarylborane compound of formula V_{A}, 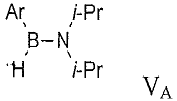 wherein Ar has the meanings above mentioned
and a possible step of isolation and purification of the diisopropylaminoarylborane compound of formula V_{A} from the reaction medium.

In an embodiment, the process provided is a process according to any one of the above wherein the step of reacting an aryl chloride with an aminoborane compound is performed in an aprotic polar solvent, in particular an aprotic polar solvent selected from methylacetate, ethylacetate, isopropylacetate, and dioxanne, or a mixture thereof,
Advantageously, said process is carried out at a temperature comprised from 10 °C to 120 °C, in particular comprised from 18 °C to 30 °C, more advantageously equal to 20 °C, during a time ranging from 1 h to 24 h, even more advantageously from 12 h to 20 h, for the preparation of an aminoarylborane compound,
or said process is a process wherein the step of reacting an aryl chloride with an aminoborane compound is performed in an aprotic polar solvent, in particular an aprotic polar solvent selected from methylacetate, ethylacetate, isopropylacetate, dioxanne and a mixture thereof,
at a temperature comprised from 10 °C to 120 °C, in particular comprised from 18 °C to 30 °C, preferably equal to 20 °C, during a time ranging from 1 h to 24 h, preferably from 12 h to 20 h,
and wherein said catalytic system is selected from the group comprising
the Pd(OAc)₂/XPhos catalytic system,
the Pd(OAc)₂/SPhos catalytic system,
the Pd(OAc)₂/DALPhos catalytic system,
a Pd(OAc)₂/NHC carbene catalytic system or
a Pd XPhos precatalyst,
with a molar percentage of the metal relative to the aryl chloride comprised from 0,01 % to 10 %, in particular comprised from 0,1 % to 5 %, more particularly comprised from 0,2 % to 2 %, preferably equal to 0,2 %, or about 1 %, or 2%
for the preparation of an aminoarylborane compound,
or said process is a process wherein the step of reacting an aryl chloride with an aminoborane compound is performed in an aprotic polar solvent, in particular an aprotic polar solvent selected from methylacetate, ethylacetate, isopropylacetate, and dioxanne, and a mixture thereof,
at a temperature comprised from 10 °C to 100 °C, in particular comprised from 18 °C to 30 °C, preferably equal to 20 °C, during a time ranging from 1 h to 24 h, preferably from 12 h to 20 h, from 16h to 18h,
and wherein said catalytic system is selected from the group comprising the Pd(OAc)₂/XPhos catalytic system,
the PdCl₂/XPhos catalytic system,
the PdBr₂/XPhos catalytic system,
the PdI₂/XPhos catalytic system,
the Pd(OAc)₂/SPhos catalytic system,
the Pd(OAc)₂/DALPhos catalytic system,
a Pd(OAc)₂/NHC carbene catalytic system,
a Pd(OAc)₂/acetophenone oxime catalytic system
or a Pd XPhos precatalyst,
with a molar percentage of the metal relative to the aryl chloride from 0,01 % to 10 %, in particular comprised from 0,1 % to 5 %, more particularly comprised from 0,2 % to 2 %, preferably equal to 0,2 %, or 1 %, or 2%,
in the presence of an organic base, in particular an organic base selected from Et₃N, BuNMe₂, *i*Pr₂NEt, *i*Pr₂NH, pyridine,
or an inorganic base, in particular an inorganique base selected from Na₂CO₃, NaOAc, K₂CO₃, KOAc, and Cs2CO3, for the preparation of an aminoarylborane compound,
or said process is a process wherein the step of reacting an aryl chloride with an aminoborane compound is performed in an aprotic polar solvent, in particular in an aprotic polar solvent selected from methylacetate, ethylacetate, isopropylacetate, and dioxanne, and a mixture thereof,
at a temperature comprised from 10 °C to 100 °C, in particular comprised from 18 °C to 30 °C, preferably equal to 20 °C, during a time ranging from 1 h to 24 h, preferably from 12 h to 20 h, and wherein said catalytic system, is selected from the group comprising :
the Pd(OAc)₂/XPhos catalytic system,
the PdCl₂/XPhos catalytic system,
the PdBr₂/XPhos catalytic system,
the PdI₂/XPhos catalytic system,
the Pd(OAc)₂/SPhos catalytic system,
the Pd(OAc)₂/DALPhos catalytic system,
a Pd(OAc)₂/NHC carbene catalytic system,
a Pd(OAc)₂/acetophenone oxime catalytic system or
a Pd XPhos precatalyst,
with a molar percentage of the metal relative to the aryl chloride comprised from 0,01 % to 10 %, in particular comprised from 0,1 % to 5 %, more particularly comprised from 0,2 % to 2 %, preferably equal to 0,2 %, or 1 %, or 2%,
in the presence of an organic base, in particular an organic base selected from Et₃N, BuNMe₂, *i*Pr₂NEt, *i*Pr₂NH, pyridine, or an inorganic base, in particular an inorganic base selected from Na₂CO₃, NaOAc, K₂CO₃,
KOAc, Cs2CO3,
and in the presence of a halide salt, in particular in the presence of
0,001 % to 50 %, in particular from 0,01 % to 20 %, and even more particularly from 0.1 % to 20 or from 0.1 to 5% of said halide salt expressed as a percentage of the number of moles of the aryl chloride (molar percentage) in the arylation reaction, said halide salt being in particular selected from KI, NaI, CsI, KBr, NaBr, CsBr, KCl, NaCl, CsCl, more particularly KI or NaI.
for the preparation of an aminoarylborane compound.

The present invention encompasses a process according to any of the above embodiments, implemented in the absence of halide salt.

In even more advantageous embodiment, the process provided is a process according to any one of the above wherein the step of converting an aminoarylborane compound into a aminoarylborane compound derivative comprises a treatment of said aminoarylborane compound by alcoholysis with an alcohol, in particular with methanol,
optionally followed by a transesterification with a second alcohol, preferably with a diol selected from the group comprising ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol,
for the preparation of an arylboronic ester or aryl boronate of the following formula VI 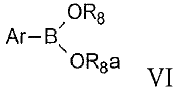 wherein R⁸, R^{8a} and Ar have the meanings mentioned above,
in particular for the preparation of a cyclic aryldialkoxyborane,
preferably for the preparation of an arylpinacolborane of the following formula VIA 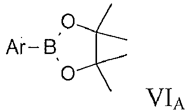 wherein Ar has the above mentioned meanings,
- or said treatment comprises a hydrolysis treatment to obtain an arylboronic acid of formula VII 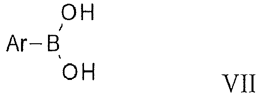 wherein Ar and B has the above mentioned meanings.

In another embodiment, the process provided is a process according to any one of the above for the preparation of a diisopropylaminoarylborane of following formula selected from: 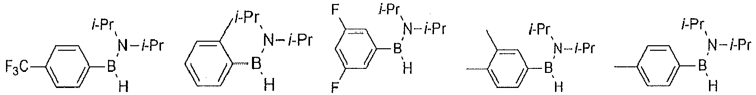 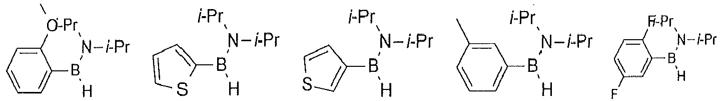 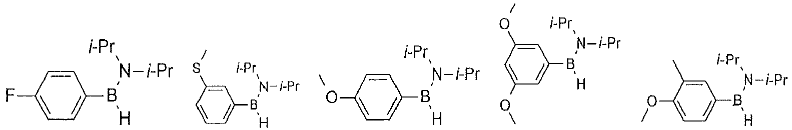 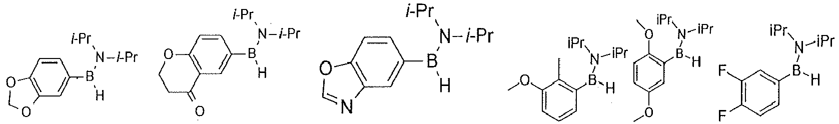 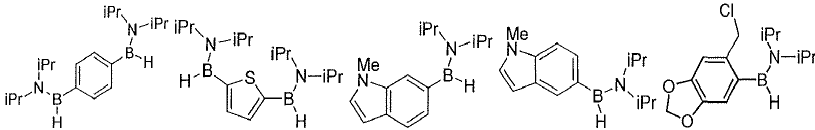 and 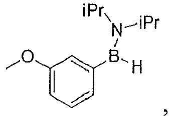 corresponding to 4-trifluoromethylphenyl-*N,N*-di*iso*propylaminoborane, 2-methylphenyl-*N,N*-di*iso*propylaminoborane, 3,5-difluorophenyl-*N,N*-diisopropylaminoborane, 3,4-dimethylphenyl-*N,N*-di*iso*propylaminoborane, 4-methylphenyl-*N,N-*diisopropylaminoborane, 2-methoxyphenyl-*N,N*-di*iso*propylaminoborane, 2-thiophenyl-*N,N*-di*iso*propylaminoborane, 3-thiophenyl-*N,N*-di*iso*propylaminoborane, 3-methylphenyl-*N,N*-di*iso*propylaminoborane, 2,5-difluorophenyl-*N,N-*diisopropylaminoborane, 4-fluorophenyl-*N,N*-di*iso*propylaminoborane, 3-thiomethoxyphenyl-*N,N*-di*iso*propylaminoborane, 4-methoxyphenyl-*N*,*N-*di*iso*propylaminoborane, 3,5-dimethoxyphenyl-*N,N*-di*iso*propylaminoborane, 3-methyl-4-methoxyphenyl-*N,N*-di*iso*propylaminoborane, 3,4-methylendioxyphenyl-*N,N-*di*iso*propylaminoborane, 6-(*N,N*-di*iso*propylaminoboranyl)-2,3-dihydro-4H-chromen-4-one ne, 5-(*N,N*-di*iso*propylaminoboranyl)-1,3-benzoxazole, 2-methyl-3-methoxyphenyl-*N,N*-di*iso*propylaminoborane, 2,4-dimethoxyphenyl-*N,N*-di*iso*propylaminoborane, 3,4-difluorophenyl-*N,N*-di*iso*propylaminoborane, 1,4-phenylene-bis-*N,N-*di*iso*propylaminoborane, thiophene-2,5-diyl-bis-*N,N*-di*iso*propylaminoborane, 1-methyl-1H-indol-6-yl-*N,N*-di*iso*propylaminoborane, 1-methyl-1H-indol-5-yl-*N,N-*di*iso*propylaminoborane, 1-(6-(chloromethyl)benzo[d][1,3]dioxol-5-yl)-*N,N-*di*iso*propylaminoborane, and 3-methoxyphenyl-*N,N*-di*iso*propylaminoborane, wherein said diisopropylaminoborane is optionally isolated and purified.

In an embodiment, the process provided is a process according to the above which comprises in addition to a step of contacting an aryl chloride with a diisopropylaminoborane compound of following formula II_{A} 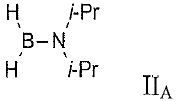 in a reaction medium containing a solvent, advantageously a solvent, a halide salt and a base, and more advantageously a aprotic and polar solvent, a halide salt and a base,
a step of converting said diisopropylaminoborane compound of formula II_{A} into a diisopropylaminoborane compound of formula II_{A} derivative, wherein said step is a step of treating said aminoarylborane of formula V_{A} directly or after an optional phase of isolation and purification, by alcoholysis, preferably a treatment with methanol, followed by a transesterification with pinacol.

In an embodiment, the process provided is a process according to the above, for the preparation of an arylpinacolborane having one of the following formula: 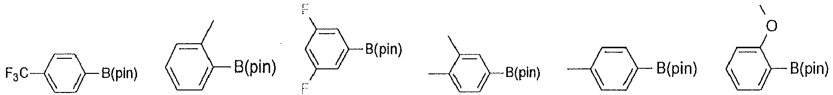 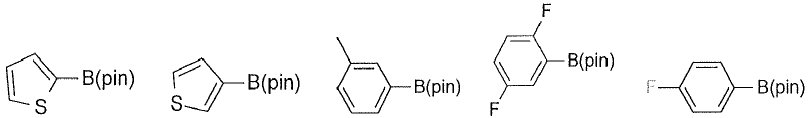 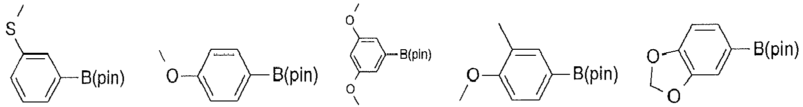 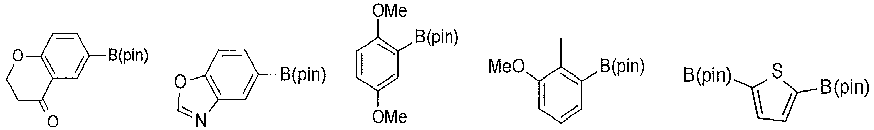 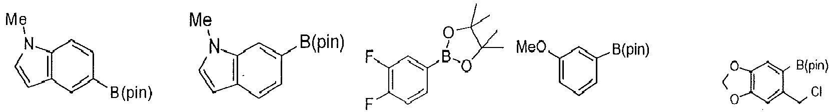 and 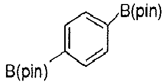 wherein -B(pin) represents: 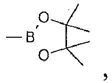 corresponding to 2-(4-trifluoromethylphenyl)-4,4,5,5-tetramethyl-1,3,2-dioxaborolane, 2-(2-methylphenyl)-4,4,5,5-tetramethyl-1,3,2-dioxaborolane, 2-(3,5-difluorophenyl)-4,4,5,5-tetramethyl-1,3,2-dioxaborolane, 2-(3,4-dimethylphenyl)-4,4,5,5-tetramethyl-1,3,2-dioxaborolane, 2-(4-methylphenyl)-4,4,5,5-tetramethyl-1,3,2-dioxaborolane, 2-(2-methoxyphenyl)-4,4,5,5-tetramethyl-1,3,2-dioxaborolane ,4,4,5,5-tetramethyl-2-(2-thienyl)-1,3,2-dioxaborolane, 4,4,5,5-tetramethyl-2-(3-thienyl)-1,3,2-dioxaborolane, 2-(3-methylphenyl)-4,4,5,5-tetramethyl-1,3,2-dioxaborolane, 4,4,5,5-tetramethyl-2-[2,5-difluorophenyl]-1,3,2-dioxaborolane, 2-(4-fluorophenyl)-4,4,5,5-tetramethyl-1,3,2-dioxaborolane, methyl 3-(4,4,5,5-tetramethyl-1,3,2-dioxaborolan-2-yl)phenyl thioether, methyl 4-(4,4,5,5-tetramethyl-1,3,2-dioxaborolan-2-yl)phenyl ether, 2-(3,5-dimethoxyphenyl)-4,4,5,5-tetramethyl-1,3,2-dioxaborolane, 2-(4-methoxy-3-methylphenyl)-4,4,5,5-tetramethyl-1,3,2-dioxaborolane, 5-(4,4,5,5-tetramethyl-1,3,2-dioxaborolan-2-yl)-1,3-benzodioxole, 6-(4,4,5,5-tetramethyl-1,3,2-dioxaborolan-2-yl)-2,3-dihydro-4H-chromen-4-one, 5-(4,4,5,5-tetramethyl-1,3,2-dioxaborolan-2-yl)-1,3-benzoxazole, 2-(2,5-dimethoxyphenyl)-4,4,5,5-tetramethyl-1,3,2-dioxaborolane, 2-(3-methoxy-2-methylphenyl)-4,4,5,5-tetramethyl-1,3,2-dioxaborolane , 2,5-bis(4,4,5,5-tetramethyl-1,3,2-dioxaborolan-2-yl)thiophene, 1-methyl-5-(4,4,5,5-tetramethyl-1,3,2-dioxaborolan-2-yl)-1*H*-Indole, 1-methyl-6-(4,4,5,5-tetramethyl-1,3,2-dioxaborolan-2-yl)-1*H*-Indole, 2-(3,4-difluorophenyl)-4,4,5,5-tetramethyl-1,3,2-dioxaborolane, 2-(3-methoxyphenyl)-4,4,5,5-tetramethyl-1,3,2-dioxaborolane, 2-(6-(chloromethyl)benzo[*d*][1,3]dioxol-5-yl)-4,4,5,5-tetramethyl-1,3,2-dioxaborolane, and 1,4-bis(4,4,5,5-tetramethyl-1,3,2-dioxaborolan-2-yl)benzene.

### GENERAL DEFINITIONS

General terms used in the description bear their usual meanings.

In the present invention, the term "halogen" means fluorine, chlorine, bromine and iodine atom.

In the present invention halogen, and OH, may be optional substituents of Ar groups in R-Ar-Cl or of R in R-Ar-Cl, only.

In the present invention, hydrocarbon chain or hydrocarbon group means alkyl, alkene, alkenyl, alkynyl, alkylaryl, aryl, in particular straight, branched carbon chains and cyclic hydrocarbon group. The number of carbons atoms in the hydrocarbon group is from 1 to 20 or from 3 to 20 (C1-20, C3-20), in particular embodiments, the number of carbon atoms is from 5 to 20, from 1 to 12, from 1 to 10 or from 1 to 5 as indicated as follows: C5-20, C1-12, C1-10, C1-5, more preferably C4-6, C1-10, C1-5.

A hydrocarbon group optionally includes a heteroatom, nitrogen atom, oxygen atom or sulfur atom (N, O, S), and is optionally substituted. Optional substituents of a hydrocarbon group include a linear alkyl group, in particular C1-10-alkyl group, O-alkyl group.

Examples of the alkylene or alkene group include C₁₋₆ alkylene groups such as a methylene group, an ethylene group, an n-propylene group, an isopropylene group, a cyclopropylene group, an n-butylene group, an isobutylene group, a sec-butylene group, a tert-butylene group, a cyclobutylene group, a 1-methyl-cyclopropylene group, a 2-methyl-cyclopropylene group, an n-pentylene group, a 1-methyl-n-butylene group, a 2-methyl-n-butylene group, a 3-methyl-n-butylene group, a 1,1-dimethyl-n-propylene group, a 1,2-dimethyl-n-propylene group, a 2,2-dimethyl-n-propylene group, a 1-ethyl-n-propylene group, a cyclopentylene group, a 1-methyl-cyclobutylene group, a 2-methyl-cyclobutylene group, a 3-methyl-cyclobutylene group, a 1,2-dimethyl-cyclopropylene group, a 2,3-dimethyl-cyclopropylene group, a 1-ethyl-cyclopropylene group, a 2-ethyl-cyclopropylene group, an n-hexylene group, a 1-methyl-n-pentylene group, a 2-methyl-n-pentylene group, a 3-methyl-n-pentylene group, a 4-methyl-n-pentylene group, a 1,1-dimetlryl-n-butylene group, a 1,2-dimethyl-n-butylene group, a 1,3-dimethyl-n-butylene group, a 2,2-dimethyl-n-butylene group, a 2,3-dimethyl-n-butylene group, a 3,3-dimethyl-n-butylene group, a 1-ethyl-n-butylene group, a 2-ethyl-n-butylene group, a 1,1,2-trimethyl-n-propylene group, a 1,2,2-trimethyl-n-propylene group, a 1-ethyl-1-methyl-n-propylene group, a 1-ethyl-2-methyl-n-propylene group, a cyclohexylene group, a 1-methyl-cyclopentylene group, a 2-methyl-cyclopentylene group, a 3-methyl-cyclopentylene group, a 1-ethyl-cyclobutylene group, a 2-ethyl-cyclobutylene group, a 3-ethyl-cyclobutylene group, a 1,2-dimethyl-cyclobutylene group, a 1,3-dimethyl-cyclobutylene group, a 2,2-dimethyl-cyclobutylene group, a 2,3-dimethyl-cyclobutylene group, a 2,4-dimethyl-cyclobutylene group, a 3,3-dimethyl-cyclobutylene group, a 1-n-propyl-cyclopropylene group, a 2-n-propyl-cyclopropylene group, a 1-isopropyl-cyclopropylene group, a 2-isopropyl-cyclopropylene group, a 1,2,2-trimethyl-cyclopropylene group, a 1,2,3-trimethyl-cyclopropylene group, a 2,2,3-trimethyl-cyclopropylene group, a 1-ethyl-2-methyl-cyclopropylene group, a 2-ethyl-1-methyl-cyclopropylene group, a 2-ethyl-2-methyl-cyclopropylene group, a 2-ethyl-3-methyl-cyclopropylene group. C₂₋₃ alkylene groups are particularly preferable.

Examples of linear alkylene group having 2 or 3 carbon atoms, or branched alkylene group having from 3 to 5 carbon atoms, are preferred.

A linear or cyclic hydrocarbon group means an alkyl group, in particular linear alkyl group, a branched alkyl group, a cycloalkyl group.

Examples of alkyl group are C1-10 alkyl group that include, but are not limited to, methyl, ethyl, propyl, 1-methyl ethyl, butyl, 1-methylpropyl, 2-methylpropyl, 1,1-dimethylethyl, pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, heptyl, octyl, 2-ethylhexyl, nonyl and decyl and their isomers.

C1-5-alkyl means for example methyl, ethyl, propyl, 1-methylethyl, butyl, 1-methylpropyl, 2-methylpropyl or 1,1-dimethylethyl, butyl, 1-methylpropyl, 2-methylpropyl, 1,1-dimethylethyl, pentyl, 1-methylbutyl, 2-methylbutyl, 3-methylbutyl, 2,2-dimethylpropyl, 1-ethylpropyl.

Cyclic alkyl groups, which are encompassed by the term "alkyl", may be referred to as "cycloalkyl" and include those with 3 to 20 carbon atoms having single or multiple fused rings. Non-limiting examples of cycloalkyl groups include adamantyl, cyclopropyl, cyclobutyl, cyclopentyl, cyclohexyl, cycloheptyl, cyclooctyl.

Heterocycle, heterocyclic, heterocyclyl or heterocyclo refers to fully saturated or unsaturated cyclic groups, for example, 4 to 7 membered monocyclic, 7 to 11 membered bicyclic, or 5 to 20 membered tricyclic ring systems, which have at least one heteroatom in the ring. Each ring of the heterocyclic group containing a heteroatom may have 1, 2, 3 or 4 heteroatoms selected from nitrogen atom, oxygen atom and sulfur atom, where the nitrogen and sulfur heteroatoms may optionally be oxidized and the nitrogen heteroatoms may optionally be quaternized. The heterocyclic group may be attached at any heteroatom or carbon atom of the ring or ring system.

Aryl refers to a C5-20 aromatic carbocyclic ring structure having a single ring or multiple fused rings, and optionally having one or more oxygen, nitrogen, and sulfur heteroatoms also referring to heteroaryl as defined below. In some embodiments, the aryl ring may be fused to a non-aromatic ring, as long as the point of attachment to the core structure is through the aromatic ring. Aryl groups include, but are not limited to, phenyl, biphenyl, and naphthyl.

Exemples of Alkyl aryl group are benzyl α-methylbenzyl eventually optically active (R or S) but are not limited to these examples

Heteroaryl refers to an aromatic ring of from 5 to 20 atoms, preferably from 5 to 15 atoms, having one or more oxygen, nitrogen, and sulfur heteroatoms within the ring, preferably 1 to 4 heteroatoms, or 1 to 3 heteroatoms. The nitrogen and sulfur heteroatoms may optionally be oxidized. Such heteroaryl groups can have a single ring (e.g., pyridyl or furyl) or multiple fused rings provided that the point of attachment is through a heteroaryl ring atom. Preferred heteroaryls include pyridyl, piridazinyl, pyrimidinyl, triazinyl, pyrrolyl, quinolinyl, isoquinolinyl, quinazolinyl, quinoxalinnyl, furanyl, thienyl, furyl, imidazolyl, oxazolyl, isoxazolyl, isothiazolyl, pyrazolyl, benzofuranyl, and benzothienyl.

Heteroaryl rings may be optionally substituted by one or more substituents as described for aryl.

Exemplary monocyclic heterocyclic or heteroaryl groups also include, but are not limited to, pyrrolidinyl, oxetanyl, pyrazolinyl, imidazolinyl, imidazolidinyl, oxazolidinyl, isoxazolinyl, thiazolyl, thiadiazolyl, thiazolidinyl, isothiazolidinyl, tetrahydrofuryl, thienyl, oxadiazolyl, piperidinyl, piperazinyl, 2-oxopiperazinyl, 2-oxopiperidinyl, 2-oxopyrrolodinyl, 2-oxoazepinyl, azepinyl, 4-piperidonyl, pyridinyl, pyrazinyl, pyridazinyl, tetrahydropyranyl, morpholinyl, thiamorpholinyl, thiamorpholinyl sulfoxide, thiamorpholinyl sulfone, 1,3-dioxolane and tetrahydro-1,1-dioxothienyl, triazolyl. Exemplary bicyclic heterocyclic groups include, but are not limited to, indolyl, benzothiazolyl, benzoxazolyl, benzodioxolyl, benzothienyl, quinuclidinyl, tetra-hydroisoquinolinyl, benzimidazolyl, benzopyranyl, indolizinyl, benzofuryl, chromonyl, coumarinyl, benzopyranyl, cinnolinyl, quinoxalinyl, indazolyl, pyrrolopyridyl, furopyridinyl (such as furo[2,3-c]pyridinyl, furo[3,2-b]pyridinyl] or furo[2,3-b]pyridinyl), dihydroisoindolyl, dihydroquinazolinyl (such as 3,4-dihydro-4-oxo-quinazolinyl), tetrahydroquinolinyl.

Exemplary tricyclic heterocyclic groups include, but are not limited to, carbazolyl, benzidolyl, phenanthrolinyl, acridinyl, phenanthridinyl, xanthenyl.

Preferred aryl and heteroaryl are phenyl, naphtalenyl, anthracenyl, phenanthrenyl, biphenyl group, pyridine, pyrazine, imidazole, pyrazole, oxazole, isoquinoline, thiophene, benzothiophene, furane, benzofurane, isoindole, benzoxazole, benzodioxole, chromanone.

Substituents of hydrocarbon group, in particular aryl group, aryl of alkylaryl group or of heteroaryl group are selected from:
hydrogen atom
□ - halogen atom selected from - F, -Cl, -Br or -I, when aryl, aryl of alkylaryl or of heteroaryl is Ar or R in R-Ar-Cl,
□ -SO₂-NH₂, or a salt thereof,
□ -SO₂-R⁹, or -SO₃-R⁹ wherein R⁹, represents
   - a hydrogen atom,
   - an optionally substituted hydrocarbon group, in particular
   - a linear alkyl group having from 1 to 20 carbon atoms,
   - a branched alkyl group having from 3 to 20 carbon atoms,
   - a cycloalkyl group having from 3 to 20 carbon atoms,
   - an alkylaryl group, in particular a benzyl group, optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, and/or optionally substituted on the benzylic carbon by an alkyl group, more specifically a methyl group, this carbon being eventually chiral.
   - an aryl group which is optionally substituted, in particular a phenyl group optionally substituted on the aromatic ring by one or several substituent (s) selected alkyl group having from 1 to 10 carbon atoms, in particular from 1 to 5 carbon atoms, alkoxy group having from 1 to 10 carbon atoms, in particular from 1 to 5 carbon atoms,
□ -NO₂,
□ -CF₃,
□ -CN,
□ -R¹⁰, wherein R¹⁰ has the same meanings as R⁹
□ -OR¹¹, wherein R¹¹ has the same meaning as R⁹
□ -OSi^{t}BuPh₂
□ -OSi^{t}BuMe₂
□ -SR¹², wherein R¹² has the same meaning as R⁹
□ -COOH, or -CO-NH₂ or a salt thereof,
□ -COOR¹³, wherein R¹³ has the same meaning as R⁹
□ -CO-NR¹⁴R^{14a}, wherein R¹⁴ and R^{14a} are identical or different and have the same meaning as R¹ and R², the carbon atom in R¹⁴ and/or R^{14a} linked to the nitrogen atom, is optionally substituted by an alkyl group having from 1 to 10 carbon atoms, in particular by a methyl group, said carbon atom being optionally chiral,
□ -NR¹⁵R¹⁵, or a salt thereof, wherein R¹⁵ and R^{15a} are identical of different and have the same meaning as R¹ and R²
   the carbon atom in R¹⁵ and/or R^{15a} linked to the nitrogen atom, is optionally substituted by an alkyl group having from 1 to 10 carbon atoms, in particular by a methyl group, said carbon atom being optionally chiral,
□ -SiR¹⁶₃, wherein R¹⁶ has the same meaning as R⁹
□ a benzyl group which is optionally substituted on the benzylic carbon, by one or several substituent (s) selected from the group comprising alkyl group having from 1 to 10 carbon atoms, alkoxy group having from 1 to 10 carbon atoms,
□ a borylated group in which B is a boron atom (oxidation state III) B(III), said group being in particular a dialkoxyboryl group of formula 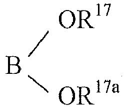 wherein OR¹⁷ and OR^{17a} represents an alkyloxy group or an acetoxy group
   R¹⁷ and R^{17a}, are identical or different, each represents:
   - a hydrogen atom,
   - an optionally substituted hydrocarbon group, in particular
   - a linear alkyl group having from 1 to 20 carbon atoms,
   - a branched alkyl group having from 3 to 20 carbon atoms,
   - a cycloalkyl group having from 3 to 20 carbon atoms,
   - an alkylaryl group, in particular a benzyl group, optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, and/or optionally substituted on the benzylic carbon by an alkyl group, more specifically a methyl group, this carbon being eventually chiral.
   - an aryl group which is optionally substituted, in particular a phenyl group optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms,
   the carbon atom in OR¹⁷ and/or OR^{17a} linked to the oxygen atom, is optionally substituted by an alkyl group having from 1 to 10 carbon atoms, in particular by a methyl group, said carbon(s) atom being optionally chiral,
   the alkoxy groups -OR¹⁷ and -OR^{17a} are optionally connected and form a ring including the boron atom and the two oxygen atoms, in particular a 5 to 7 membered ring derived from a diol selected from ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol,
   said 5 to 7 membered ring comprising a dialkoxy moiety of the diol selected from ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol),
□ a borylated group wherein B is boron atom (oxidation state IV) of formula B(IV), in particular:
   ■ a trifluoroborate group,
   ■ a trialkylborate group, -B(OR^{a})₃, wherein R^{a} is an alkyl group having from 1 to 10 carbon atoms, (OR^{a})₃ is optionally forming a bicyclic system including the boron atom and the three oxygen atoms, representing a trialkoxy moiety of a triol selected from the group comprising 1,2,3-propane triol (glycerol) or 1,1,1-tris(hydroxymethyl)ethane (2-(hydroxymethyl)-2-methyl-1,3-propanediol),
   ■ a boratrane group, in particular a borotrane group wherein a N,N-bis(hydroxyalkyl)alkylamine derivative of formula HO-R^{b}-NR^{c}-R^{b'}-OH forms a ring with the boron atom.
      R^{b} and R^{b'}, are identical or different, each represents a linear alkylene group having 2 or 3 carbon atoms, or branched alkylene group having from 3 to 5 carbon atoms,
      R^{c} is a hydrogen atom or an alkyl group having 1 to 4 carbon atoms, in particular a N,N-bis(hydroxyalkyl)alkylamine group of formula HO-R^{b}-NR^{c}-R^{b'}-OH forming a [4,0,4], or [4,0,5] or [5,0,5] bicyclic boratrane heterocycle with the boron atom,
      wherein R^{b} and R^{b'}, are identical or different, each represents a linear alkylene group having 2 or 3 carbon atoms, or branched alkylene group having from 3 to 5 carbon atoms,
      R^{c} is a hydrogen atom or an alkyl group having 1 to 4 carbon atoms.
      In general, a boratrane group is an atrane group with a boron atom as a heteroatom.
      Boratrane groups may be derived from any of the atrane groups herewith incorporated by references in Verkade, John G. (1994). "Main group atranes: Chemical and structural features". Coordination Chemistry Reviews 137: 233;
      In a preferred embodiment, said boratrane group may be obtained by transesterification of a boronate or boronique acid with. N,N-bis(hydroxyalkyl)alkylamine derivative
      Other examples of boratrane group according to the present invention may be as in Yu. I. Bolgova, G. A. Kuznetsova, O. M. Trofimova, M. G. Voronkov. Convenient and fast synthesis of boratrane in water medium. Chemistry of Heterocyclic Compounds, 2013, 49 (8), pp 1246-1248 herewith incorporated by reference.
   ■ a MIDA borate group of the following formula 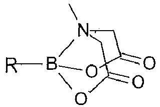 in particular, a R-MIDA wherein R is an optionally substituted hydrocarbon group.
   Alkoxy refers to --O-alkyl, wherein alkyl is as defined above, in particular a C1-10 alkyl or a C1-5 alkyl.
   Acetoxy refers to --O- CO- alkyl wherein alkyl is as defined above, in particular a C1-10 alkyl or a C1-5 alkyl.

Examples of alkylamines or dialkylamines, having 2 to 24 carbon atoms are for example ethylamine, propylamine, isopropylamine, butylamine, hexylamine, octylamine, dodecylamine, octadecylamine, behenylamine, eicosylamine; alkenylamines oleylamine;

Examples of dialkylamines are diethylamine, diisopropylamine, dibutylamine, ethylbutylamine, dihexylamine, dioctylamine

### ARYL-CHLORIDE

### Many of them are commercially available.

Aryl chlorides compounds may be prepared in a general way by chlorination of an aromatic derivative or according to any of the process previously described in documents herein incorporated by reference US2009012293(A1), US2002016512 (A1), EP0846676 (A1), US3622639 (A), US3197503 (A), US3226450 (A).

### AMINOBORANE

Aminoborane compounds may be prepared according to any of the process previously described in documents herein incorporated by reference. US2012065430 (A1), US2005107633 (A1),JP3477490 (B2), JP3591866 (B2), JPH06312991 (A), EP0181721 (A1), GB1323219 (A), US3201465 (A), GB935121 (A) and GB857176 (A).

### GENERAL PROCESS

In general, the step of arylation is implemented by contacting an aryl chloride with an aminoborane compound in the presence of a catalytic system, in a reaction medium containing a solvent.

In general, an aryl chloride compound together with an amino borane compound, a catalytic system, optionally a halide salt and/or a base are placed in a reaction vessel under protective gas and the mixture is heated and then maintained at a constant temperature while stirring.

In general, the reactants may be combined at ambient temperature. Once the reactants are combined, the reactions are typically performed at temperatures from 10 to 120°C, preferably 50 to 70° and in a preferred embodiment at 20°C.

After the arylation reaction is completed, the reaction is quenched. An aminoarylborane compound is obtained.

In a preferred embodiment, after the arylation reaction is quenched, solid products are then precipitated and can be filtered off and, for example, washed appropriately, for example with water. Liquid products can be extracted by means of an organic solvent for example, by distillation. Products are, if appropriate, are purified further by, for example, by crystallization or precipitation.

In general, the step (2) of converting an aminoarylborane compound into an aminoarylborane compound derivative, such as into an arylborane compound, comprises a treatment of said aminoarylborane compound by alcoholysis with an alcohol, such as with methanol, followed by a transesterification with a second alcohol, preferably with a diol selected from the group comprising ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol.

In a preferred embodiment, the following compounds are obtained after step (1):
an aminoarylborane compound of the following formula: 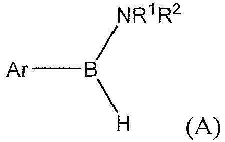
   ■ an alkoxyaminoarylborane compound of following formula 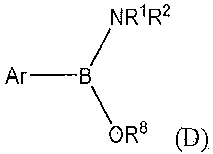
   ■ an a diaminoarylborane compound of following formula 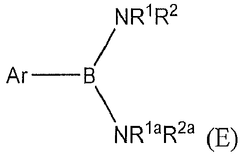 wherein:
      - H, B and Ar, NR¹, R², NR^{1a}R^{2a} -OR⁸ are as defined above.
      In a more preferred embodiment the following compounds are also obtained after step (1) and (2):
   ■ an arylboronic acid compound of the following formula 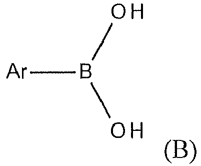
   ■ a dialkoxyarylborane compound of the following formula: 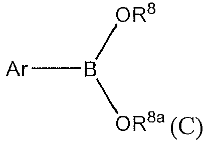 wherein Ar and B are as defined above, OH is a hydroxyl group, -OR⁸ and -OR^{8a} are as defined above, in particular for the preparation of a cyclic aryldialkoxyborane

### CATALYTIC SYSTEMS

For purposes of the present invention, a catalytic system means a system catalyzing an arylation reaction of an aminoborane BH bond. The catalytic systems are organometallic complexes comprising at least one metal (transition metal) or at least one metal (transition metal) and at least one ligand.

A catalytic system may include further a base and/or a halide salt, in a suitable solvent.

In a preferred embodiment, the catalytic system is a preformed complex obtained by reacting at least one metal compound or derivative with one ligand.

In another preferred embodiment, the metal is palladium, copper, iron, nickel, platinum and manganese (Pd, Cu, Fe, Ni, Pt), preferably platinum or palladium, and more preferably palladium.

More preferred metal compounds or derivatives include salts, including ketonates, acetylacetonates, (nitrile) halides, (olefin) halides, halides, allylhalides and biscarboxylates.

Even more preferred palladium metal compounds include PdXPhos (second generation), palladium acetate Pd(OAc)₂, palladium diacetylacetonate Pd(acac)₂, palladium cyanide Pd(CN)₂, PdBr2, PdI2, and/or PdCl₂, palladium cyanide Pd(CN)₂ or allylpalladium chloride (CH₂.dbd.CHCH₂PdCl).

Ligand means a compound that binds to the metal, in particular said ligand also participates to the catalytic selectivity of the catalytic system for the desired coupling reaction.

Examples of suitable groups that can be added to ligands include sulfonic acid groups, carbonic acid groups, phosphonic acid groups, phosphonium groups, peralkylammonium groups, hydroxyl groups, and polyether groups having an appropriate chain length, salts thereof, and combinations thereof.

Examples of ligands are the following types of compound eventually substituted by the above groups:
I. Phospines compounds, in particular dialkylphosphines trialkylphosphines, tricycloalkylphosphines, triarylphosphines, alkylbiarylphosphine dialkylarylphosphines, alkyldiarylphosphines and heteroarylphosphines such as tripyridylphosphine and trifurylphosphine,
II. C-based Ligands in particular, N-based ligand, in particular N-heterocyclic carbene ligands. As N-heterocyclic carbene ligands, N-heterocyclic carbene ligands described in N-Heterocyclic Carbenes: A NewConcept in Organometallic Catalysis, by Wolfgang A. Herrmann. Angew. Chem. Int. Ed. 2002, 41, 1290 - 1309 WILEY-VCH VerlagGmbH, 69451 Weinheim, Germany, 2002 1433-7851/02/4108-1291 are herein incorporated by reference.
   Preferred examples of N-heterocyclic carbene ligands are 1,3-Diisopropylimidazolium tetrafluoroborate, 1,3-Bis(1-adamantanyl)imidazolium tetrafluoroborate, 1,3-Bis-(tert-butyl)-4,5-dihydro-1H-imidazolium tetrafluoroborate , N,N'-(2,4,6-Trimethyl)dihydroimidazolium chloride, N,N'-(2,6 Diisopropylphenyl)dihydroimidazolium chloride.
III. Oximes ligands, in particular glyoxime, or glyoxime derivatives, such as alkyl glyoximes, or diaminoglyoxilne may be used.
   As alkyl glyoxime, methyl glyoxime, dimethyl glyoxime, methyl isopropyl glyoxime, methyl hexadecyl glyoxime, dinonyl glyoxime, octyl carbomethoxyheptyl glyoxime, diphenyl glyoxime, methyl phenyl glyoxime, pentamethylene glyoxime, decamethylene glyoxime, tetramethylene glyoxime, di-2-furyl-glyoxime, di-n-tridecyl glyoxime, phenyl 4-methoxyphenyl glyoxinie, di(2,4,6-trimethyl phenyl) glyoxime, di-lnaphthyl glyoxime, and di-(6-methyl-2-quinolyl) glyoxime may be used. The aliphatic and non-aromatic alicyclic glyoximes are preferred.

Example of diaminoglyoxime, are 2-Aminobenzamide oxime, 3-Amino-benzamide oxime, 4-Aminobenzamide oxime, 4-Diethylaminobenzaldehydeoxime, Aminoglutethimide, DL-Aminoglutethimide, Aminopyrine, Anti-diphenylglyoxime, Desaminotyrosine, Dexaminoglutethimide, Diamine oxidase, Diaminoarea polymer, 2,4-Diaminopyrimidine, 2,5-Diaminopyrimidine, 2,6-Diaminopyrimidine, 4,5-Diaminopyrimidine, 4,6-Diaminopyrimidine, Dichloroglyoxime, Diaminotoluene, Durabolin oxime, Dimethylglyoxime, Diphenylglyoxime, Isatin-3-oxime, Methylglyoxime. 5-Chloro-1,3-benzodioxole is preferred.

The ligand can be an arsine, such as, for example, triphenylarsine, an aromatic or nonaromatic nitrile, for example chosen from acetonitrile or benzonitrile, an isonitrile, for example chosen from methyl isonitrile or tert-butyl isonitrile, an aromatic or heteroaromatic imine, such as, for example, N-methylbenzylimine, or an imidazo-2-ylidene, such as, for example, N,N'-dibenzylimidazo-2-ylidene.

If desired, mixtures of two or more different ligands can also be used.

In the group I, the three substituents on the phosphorus can be identical or different, chiral or achiral, where one or more of the ligands can link the phosphorus groups of a plurality of phosphines, and where a part of this linkage can also be one or more metal atoms, phosphites, phosphinous esters and phosphinous esters, phosphols, dibenzophosphols and cyclic or oligocyclic and polycyclic compounds containing phosphorus atoms.

Further suitable groups of complexing ligands include, for example, bipyridines, phenanthrolines, porphyrins and alizarins.

Examples of advantageous ligands of the group I include the following:
(i) sulfonated phosphines, including sulfonated phosphines having the following formula: R₃₋ₙP(p-c₆H₄SO₃K)ₙR=C₆H₅, 2-pyridyl, 3-pyridyl; n=1-3 P[p-OC₆II₄SO₃ (NII(i-octyl)₃]₃;
(ii) phosphines having hydrophilic groups in the periphery;
(iii) phosphines having quaternized aminoalkyl and aminoaryl substituents;
(iv) carboxylated phosphines;
(v) Phosphates having hydroxyalkyl or polyether substituents;
(vi) phosphinoalkylphosphonium salts;
(vii) phosphites;
(viii) halogenated phosphines

Examples of trialkylphosphines are set forth, for example, in G. M. Kosolapoff, entitled Organophosphorus Compounds (New York, Wiley, 1950).

As examples of trialkylphosphines which may be used in the process of the invention may be listed, for example, trimethylphosphine, triethylphosphine, tri-n-propylphosphine, triisopropylphosphine, triisobutylphosphine, tri-2-amylphosphine, trioctylphosphine, tridodecylphosphine, trihexadecylphosphine, etc., as well as mixed trialkyl phosphines such as etbyldimethylphosphine, diethylmethylphosphine, diethylpropylphosphine, diethylisoamylphosphine, ethyldiisopropylphosphine, di-n-butyldodecylphosphine, ethylisobutylisopropylphosphine, butylethylmethylphosphine.

Examples of triarylphosphines are triphenylphosphine, tri-o-tolylphosphine, tri-p-tolylphosphine, tri- 2,4 xylylphosphine, tris-(2,4,5-trimethylphenyl)phosphine, tri-1-naphthylphosphine, tri-4-biphenylylphosphine, biphenyl-di-o-tolylphosphine, diphenyl-o-tolylphosphine, phenyl-o-tolyl-p-tolylphosphine, 1-naphthyldiphenylphosphine.

Another class of basic phosphines useful in the present process includes alkylarylphosphines such as methyldiphenylphosphine, dimethylphenylphosphine, dimethyl-p-tolylphosphine, dimethyl(4-benzylphenyl)phosphine, dimethyl-3,4-xylylphosphine, diethylphenylphosphine, dipropylphenylphosphine, dipropyl-2,5-xylylphosphine, dibutylphenylphosphine, dibutyl-p-tolylphosphine, diamyl-2,5xylylphosphine.

More particularly, triphenylphosphine sulfonate (TPPMS), triphenylphosphine disulfonate (TPPDS), triphenylphosphine trisulfonate (TPPTS), (1-N,N,N-trimethyl)amino-2-diphenylphosphinoethane iodide (AMPHOS), sodium tetrasulfonated-[2,2'-bis(diphenylphosphinomethyl)]-1,1'-biphenyl (BISBI), sodium 4,7-di-(p-sulfonated)phenyl-1,10-phenanthronline (PHEN), may be used.

Examples of cycloallcylphosphines are cyclohexyldimethylphosphine, dicyclohexylmethylphosphine (4 methylcyclohexyl) diamylphosphine, etc.; aralkylphosphines such as tribenzylphosphine, benzyldiphenylphosphine, triphenethylphosphine, etc; and cyclic phosphines such as 1,4-butylenylphenylphosphine, 1,5-pentylenyl-p-tolylphosphine.

Examples of alkenylphosphines are triallylphosphine, tris-(Z-methyl-Z-propenyDphosphine, tri-2-hexenylphosphine, diallylrnethylphosphine, diallylethylphosphine, di-Z-butenyl-n-butylphosphine, 4-pentenylethylhexadecylphosphine.

Patent US 3,031,509 describes the preparation of dialkylphosphines and is incorporated herein by reference. A preferred dialkylphosphine is fluorenyldialkylphosphine.

An example of mixed arylalkylphosphines is diadamantylalkylphosphine,

In a preferred embodiment, ligands are tricyclohexylphosphine (PCy₃), bis(2-diphenylphosphinophenyl)ether (DPEPhos) : Ligand, ligands containing di(1-adamantyl)phosphino [P(1-Ad)₂] fragment (DALPhos Ligands), in particular Di(1-adamantyl)-2-morpholinophenylphosphine (Mor-DalPhos), Di(1-adamantyl)-2-dimethylaminophenylphosphine (Me-Dalphos), Di(1-adamantyl)-1-piperidinylphenylphosphine, Xphos ligands such as 2-Dicyclohexylphosphino-2',4',6'-triisopropylbiphenyl, Sphos Ligand such as 2-Dicyclohexylphosphino-2',6'-dimethoxybiphenyl,C-Phos Ligand, 2-(2-dicyclohexylphosphanylphenyl)-N1,N1,N3,N3-tetramethyl-benzene-1,3-diamine; 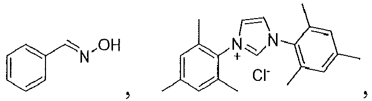 triphenylarsine (AsPh₃),

More preferred ligands are PCy₃, AsPh₃, XPhos, SPhos, DALPhos, NHC carbene, acetophenone oxime.

The amount of ligand used in the present process is dependent upon the amount of transition metal used. For example, a monodentate ligand requires approximately 2 equivalents of ligand relative to the palladium catalyst whereas a bidentate ligand would require only 1 equivalent.

As an example, the amount of ligand(s) may be selected such that the ratio of the transition metal to the ligand(s) is from 0.1: 1 to 100: 1, such as 0.8: 1 to 2: 1, in particular 1:1, 1:2, or 1:3.

A molar percentage of the metal relative to the aryl chloride is from 0.01 % to 10 %, in particular comprised from 0.1 % to 5 %, more particularly comprised from 0.2 % to 2 %, preferably equal to 0.2 %, or 1 %, or 2%.

In general, the catalyst (metal+ligand) is employed catalytically (0.005-10 mole percent) relative to the aryl chloride compound. More typically, 0.05 to about 5 mole percent is employed while most typically, 0.5 to about 1.5 mole percent is employed.

It is clear to a person skilled in the art that, in the reaction according to the present invention, it is possible to use preformed catalysts and catalysts for which the complex-ligand(s) coordination occurs during said reaction.

The following combinations of Metal/ligand(s) are advantageous: Pd(OA_{C})₂/XPhos, PdCl₂/XPhos PdBr₂/XPhos, PdI₂/XPhos, Pd(OAc)₂/SPhos, Pd(OAc)₂/DALPhos, Pd(OAc)₂/NHC carbene, Pd(OAc)₂/acetophenone oxime, Pd XPhos precatalyst, more preferably Pd(OAc)₂/XPhos, Pd(OAc)₂/SPhos,Pd(OAc)₂/DALPhos, Pd(OAc)₂/NHC carbene, Pd XPhos precatalyst.

### HALIDE SALT

According to an advantageous embodiment, the arylation reaction of the present invention is conducted in presence of a halide salt, in particular a halide salt selected from the group comprising KI, NaI, CsI, KBr, NaBr, CsBr, KCl, NaCl, CsCl, more particularly KI and NaI, or a mixture thereof, for example, KI and NaCl.

The amount of halide salt required to effectively implement the arylation reaction according to the present invention may vary compared to total reactant weight from about 0.001 percent to about 50 percent. It is preferred to employ the halide salt in amounts from 0.01 % to 20 %, and even more particularly from 0.1% to 20 or from 0.1 to 5% expressed as a percentage of the number of moles of the aryl chloride (molar percentage) in the arylation reaction.

The amount of halide salt can be expressed in equivalent in relation to the number of moles of the limiting reactant. In a preferred embodiment the amount of halide salt is expressed in equivalent in relation to the number of moles of aryl chloride.

The amount of halide salt represents therefore 0.01 to 10 equivalents (Eq), from 0.01 to 5 (Eq), more preferably from 0.5, 1 or 2 Eq. relative to the amount of the limiting reagent (in mole). In a preferred embodiment, the amount of halide salt represents 0.01 to 10 equivalents (Eq), from 0.01 to 5 (Eq), more preferably from 0.5, 1 or 2 Eq. relative to the amount of aryl chloride.

### BASE

It is a feature of the process of the present invention that arylation is carried out in the presence of base. Under these conditions the yield of arylation reaction is increased.

Any organic bases compatible with the solvent are suitable as for these reactions.

In a preferred embodiment the process of the present invention is conducted in presence of a least one base. In a more preferred aspect, the process according invention is conducted in presence of an organic base. An example of organic base according to the invention is Et₃N,

BuNMe₂, *i*Pr₂NEt, *i*Pr₂NH, pyridine, preferably a base is selected from the group consisting in Et₃N, BuNMe₂, *i*Pr₂NEt, *i*Pr₂NH, pyridine, and a mixture thereof.

In another preferred embodiment, the arylation reaction is conducted in presence of an inorganic base.

Any inorganic bases compatible with the solvent are suitable as for these reactions. Most preferred bases include, but are not limited to, CsOAc, CsF, K3PO4, KOAc, K2CO3, Cs2CO3 and any other carbonates, phosphates, or fluorides or mixtures or combinations thereof. Potassium phosphate affords somewhat better selectivity for monoarylation and is cheaper than cesium salts. Potassium phosphate is used in all subsequent reactions for the arylation of heterocycles, and thus constitutes the most preferred base. Cesium carbonate is the most preferred base for the arylation of benzoic acids and phenols. Advantgeous inorganic bases are Na₂CO₃, NaOAc, K₂CO_{3,} Cs2CO3, preferably Na₂CO₃, NaOAc, K₂CO₃.

Preferably, the process is conducted in presence of a least one base added into the arylation reaction in an amount corresponding to from 2 to about 6 equivalents, relative to the aryl chloride compounds.

More typically, 3.0 to about 6.0 equivalents are employed while most typically, 3.5 to about 4.5 equivalents are employed.

### SOLVENTS

It is a feature of the process of the present invention that arylation is carried out in the presence of an aprotic polar solvent. Less secondary products are obtained in the presence of an aprotic polar solvent and yield is much improved.

Advantageously, the solvent is an aprotic polar solvent selected from the group consisting of methylacetate, ethylacetate, isopropylacetate, dioxane acetonitrile, propionitrile, butyronitrile, dimethylacetamide (DMAc), N-methyl-2-pyrrolidone (NMP), 2-methoxy-2-methylpropane (MTBE) or tetrahydrofuran (THF), glymes, diglymes and a mixture thereof.

Preferably, the solvent is aprotic and polar, in particular the solvent is selected from the group comprising cyclic etheroxides, in particular dioxanne or tetrahydrofuran (THF), or the group comprising dialkyl etheroxides, in particular, 2-methoxy-2-methylpropane (MTBE), diethylether, glymes, more particularly diglyme, or the esters group in particular methylacetate, ethylacetate, isopropylacetate, or the alkylnitrile group in particular acetonitrile, propionitrile, butyronitrile, or the amide group in particular dimethylacetamide (DMAc), N-methyl-2-pyrrolidone (NMP), or a mixture thereof, more particularly from methylacetate, ethylacetate, isopropylacetate, dioxanne or glymes, more particularly diglyme or a mixture thereof. More preferably, the solvent is selected from the group consisting in methylacetate, ethylacetate, isopropylacetate, dioxanne, preferably distilled dioxanne, glymes and diglymes.

In the present study, term "dioxane" and "dioxanne" are used indifferently. Dioxanne, is preferably freshly distilled dioxanne.

The arylation reaction may take place in the presence of another additional suitable solvent.

The term "suitable solvent" refers to any solvent, or mixture of solvents, that allows the desired reaction to proceed, said reaction being arylation, esterification, isolation, purification etc as defined in step (1) and (2) and optional step(s).

Suitable solvents include for example methylene chloride, chloroform, 1,2-dichloroethane, diethyl ether, acetonitrile, ethyl acetate, 1,3-dimethyl-2-inudazolidinone, 1,4-dioxane, tetrahydrofuran, dimethylformamide, toluene, chlorobenzene, dimethylsulfoxide, N-methylpyrrolidinone, dimethylacetamide, hexamethylphosphoramide, toluene, xylene, halophenyl solvents such as chlorobenzene, etheral solvents such as glyme, diglyme and ethyleneglycol diether ether, mixtures thereof.

It is an important condition according to a preferred embodiment of the invention to use a combination of a halide salt and a catalytic system in an aprotic polar solvent to improve the yield of the arylation reaction.

### TEMPERATURE

The process of the invention is carried out at a temperature from 10°C to 120°C, from 20°C to 120°, from 31 to 80°C, from 50 to 70°C. In a preferred embodiment, the process according to the invention is carried out at a temperature from 18 °C to 30 °C, preferably equal to 20 °C.

In another embodiment, a process or a use according to the invention is carried out at a temperature comprised from 20°C to 70°C, and even more preferably from 50°C to 70°C, at at 20°C, at 50°C, at 90°C or at 110°C.

An advantage of the process of the invention is that it can be carried out at 20°C or at room temperature. Room temperature means from 18°C to 25°C, and in particular at 20°C.

The use of an aryl chloride according to the present invention or the process of arylation according to the present invention may be carry out at a temperature comprised between 10 and 120°C, in particular 20°C to 110°C and more particularly between 50°C and 110 °C.

### TIME OF REACTION

The reaction time of the process according to the invention can be, for example, from 1 hour to 24 hours; preference is given to from 10 to 20 hours. In a preferred embodiment the reaction time is 12 hours, in a more preferred embodiment the reaxtion time is 16 hours.

Typically, the time required to implement the overall process will be dependent upon the temperature at which the reactions are run.

In a particular embodiment, the time is ranging from 1 h to 24 h, preferably from 12 h to 20 h, and more preferably between 16 h and 18 h, even more preferably 16 h at 20°C

Therefore, the progress of the reactions should be monitored via conventional techniques, for example by High-performance liquid chromatography (HPLC), thin layer chromatography or gas chromatography to determine when the reactions are substantially complete. Monitoring the progress of chemical reactions is well within the ordinarily skilled artisan's capability.

Therefore, the process according to the invention is aimed at simplifying the preparation of a aminoarylborane derivative by the use of substrates that are easily available on the market, and cheaper, moving from multi-step synthesis methods known in the art including steps of isolation of intermediate products to a process having a single step that leads directly to the desired product with a good yield.

These and other objects and advantages of the invention, which will become even more apparent in light of the detailed description of examples below and achieved through the process of the invention described herein.

### MEANINGS OF THE ABBREVIATIONS

NMR: nuclear magnetic resonance, and to describe the nmltiplicities: s = singlet, d =doublet, m = multiplet.
TLC: thin layer chromatography
GC-MS: gas chromatography - mass spectrum
t_{R}: retention time
wt: weight
m refers to the molecular or atomic mass number
z to the charge number of the ion.
m/z is a dimensionless quantity
PTFE: polytetrafluoroethylene
i.d.: internal diameter
M: mol/L
DMAc: dimethylacetamide
NMP: N-methyl-2-pyrrolidone
CDCl₃ : deuterated chloroform

### TECHNIQUES

GC-MS analysis were performed with a HP 6890 series GC-system equipped with a J&W Scientific DB-1701 capillary column, a HP 5973 mass selective detector (EI) using the following method : 70°C for 1 min then 20°C.min⁻¹ until 230 °C then 6 min at 230 °C. 1H, 11B, 13C, 19F and 31P NMR were recorded on 300 MHz Avance I and 400 MHz Avance II spectrometers, The chemical shifts (δ) and coupling constants (J) are expressed in ppm and Hertz respectively.

### CHEMICALS

Pinacol and pinacolborane were purchased from Sigma-Aldrich. Pinacol was distilled before use. Diisopropylaminoborane was prepared as described in literature. All catalytic reactions were carried out under argon atmosphere unless specified. All chemicals were stored under argon. Acetonitrile was distilled over CaH₂. Silica gel (230-400 mesh) purchased from Merck was used for flash chromatography. Analytical TLC silica gel 60 F254 were used.

Aryl chlorides and Halide salt were purchased from TCI, Alfa Aesar and Sigma Aldrich. Catalytic systems, including lignads are commercially available at Strem Chemicals and Johnson Matthey.

### Synthesis of aminoborane compounds

As a way of example, synthesis of diisopropylaminoborane may be as follows: To a stirred solution of diisopropylamine (70.6 mL, 0.5 mol, 1 eq) in THF (200 mL) were added at 0 °C 20.4 mL of H₂SO₄ (0.75 mol, 0.5 eq). After 15 min at 0 °C, 28.4 g of NaBH₄ (0.75 mol, 1.1 eq) in powder were carefully added. The mixture was allowed to warm to room temperature and stirred for 3h. The crude was concentrated under vacuum and the residue was taken with toluene, washed with water (4 x 100 mL). The organic phase was dried over Na₂SO₄ and concentrated under reduced pressure to give the amine-borane complex. The amine-borane complex was refluxed at 210 °C with a sand bath in the presence of a bubbling device to observe the formation of hydrogen. After the completion of the dehydrogenation (about 1h30), a distillation apparatus was installed and the aminoborane was distilled under argon (bp: 80-85/760 mmbar) to give a 5 1 g of colorless liquid (90 % yield).

### GENERAL IMPLEMENTATION OF ARYLATION REACTION, BETWEEN AN AMINOBORANE AND AN ARYL CHLORIDE FOLLOWED BY ALCOHOLYSIS AND TRANSESTERIFICATION

General procedure for catalytic system optimization

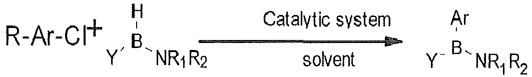

### 1. Step of arylation

A reaction flask was charged with a catalytic system, (metal precursor, ligand, and optionally halide salt) and then with a solvent, optionally a base, arylchloride or formula R-Ar-Cl as defined below and aminoborane of formula H-B-NR1R2 wherein NR1R2 is as defined below under argon atmosphere. The reaction was optionally heated to reach a given temperature.Total consumption of either starting material was determined by gas chromatography (GC) or thin layer chromatography (TLC) analysis.

### Optional phase of isolation purification

The amino aryl borane compound obtained is optionally isolated and purified.

### 2. Step of convertion by alcoholysis and optional esterification

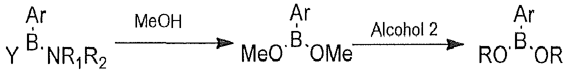

A first alcohol 1 was added to the amino aryl borane of formula Ar-B(Y)NR1R2 obtained at the step one of arylation and the mixture was stirred for 1 h at room temperature (20°C); a second alcohol (2) in particular a diol was added to the reaction and stirred for 4 h at room temperature.

Optionally, the resulting compound was purified and filtered, then concentrated under vacuum to afford an isolated pure aryl boronate. A pure aryl boronate means an aryl boronate with 0 to 0.01 % impurities.

Few specific reactions are illustrated by reaction schemes below through examples given in each of the cases for an aminoborane compound as defined above and an aryl chloride as defined above.

### Procedure of arylation of a diisopropylaminoborane

In a reaction flask charged with a metal precursor, optionally a halide salt and a ligand under argon atmosphere were added in this following order: anhydrous solvent (2 mL), optionnaly a base, an arylchloride (1 mmol) or formula Ar-Cl wherein Ar is R-phenyl and R is as defined below for aryl substituents in Ar-Cl; advantageously, R (substituents for Ar-Cl) is CF3, methyl, O-methyl; and diisopropylaminoborane (0.3 mL, 2 mmol). The reaction was then heated at a given temperature for a given time. After total consumption of either starting material, the reaction was cooled at -5 °C, quenched with anhydrous MeOH (2 mL) and stirred for 1 h at room temperature (20°C).

All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford the 100% aryl boronate.

### EXEMPLES

Table 1, 2 and 3 represents experimental conditions implemented according to the process of the present invention for the preparation of a specific compound:

Each experimental condition is numbered from 1 to 55 and illustrates a particular example as define below:

**Table1**

| | | | | | | | | | | | | |
|---|---|---|---|---|---|---|---|---|---|---|---|---|
| 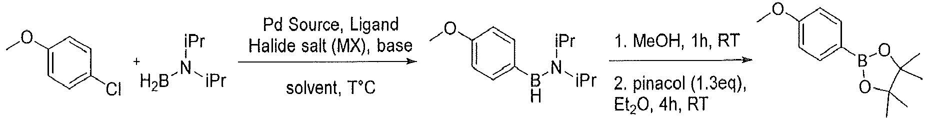 | | | | | | | | | | | | |

| Entry | Pd source | Pd loading | Ligand | Ligand loading | MX | MX loading | Base | Base loading | Temperature | Solvent | Time | Yield |
|---|---|---|---|---|---|---|---|---|---|---|---|---|
| 1 | Pd(OAc)₂ | 1mol% | XPhos | 3mol% | KI | 1mol% | Et₃N | 3eq | 90°C | Dioxane | 16h | 79% |
| 2 | Pd(OAc)₂ | 1mol% | Sphos | 3mol% | KI | 1mol% | Et₃N | 3eq | 50°C | Dioxane | 16h | 53% |
| 3 | Pd(OAc)₂ | 0.2mol% | Xphos | 0.6mol% | KI | 1mol% | Et₃N | 3eq | 90°C | Dioxane | 16h | 25% |
| 4 | PdXPhos (2^{nd} generation) | 2mol% | - | - | KI | 2mol% | Et₃N | 3eq | 50°C | EtOAc | 16h | 99% |
| 5 | Pd(PCy₃)₂ | 2mol% | - | - | KI | 50mol% | Et₃N | 3eq | 50°C | EtOAc t | 16h | 22% |
| 6 | PdCl₂ | 2mol% | XPhos | 6mol% | KI | 50mol% | Et₃N | 3eq | 50°C | EtOAc | 16h | 29% |
| 7 | PdBr₂ | 2mol% | XPhos | 6mol% | KI | 50mol% | Et₃N | 3eq | 50°C | EtOAc | 16h | 66% |
| 8 | PdI₂ | 2mol% | XPhos | 6mol% | KI | 50mol% | Et₃N | 3eq | 50°C | EtOAc | 16h | 30% |
| 9 | Pd(OAc)₂ | 1mol% | XPhos | 3mol% | KI | 1mol% | Et₃N | 3eq | 50°C | Dioxane | 16h | 83% |
| 10 | Pd(OAc)₂ | 1mol% | XPhos | 3mol% | KI | 1mol% | Et₃N | 3eq | 50°C | EtOAc | 16h | 90% |
| **11** | **Pd(OAc)₂** | **1mol%** | **XPhos** | **3mol%** | **KI** | **1mol%** | **Et₃N** | **3eq** | **20°C** | **Dioxane** | **16h** | **99%** |
| 12 | Pd(OAc)₂ | 1mol% | XPhos | 3mol% | KI | 1mol% | Et₃N | 3eq | 70°C | Dioxane | 16h | 80% |
| 13 | Pd(OAc)₂ | 1mol% | XPhos | 3mol% | KI | 1mol% | Na₂CO₃ | 3eq | 50°C | Dioxane | 16h | 40% |
| 14 | Pd(OAc)₂ | 1mol% | XPhos | 3mol% | KI | 1mol% | Na₂CO₃ | 3eq | 100°C | Dioxane | 16h | 30% |
| 15 | Pd(OAc)₂ | 1mol% | XPhos | 3mol% | KI | 1mol% | NaOAc | 3eq | 50°C | Dioxane | 16h | 32% |
| 16 | Pd(OAc)₂ | 1mol% | XPhos | 3mol% | KI | 1mol% | NaOAc | 3eq | 100°C | Dioxane | 16h | 9% |
| 17 | Pd(OAc)₂ | 1mol% | XPhos | 3mol% | KI | 1mol% | K₂CO₃ | 3eq | 100°C | Dioxane | 16h | 13% |
| 18 | Pd(OAc)₂ | 2mol% | XPhos | 6mol% | KI | 2mol% | - | - | 50°C | EtOAc t | 16h | 26% |
| 19 | Pd(OAc)₂ | 2mol% | PCy₃ | 6mol% | KI | 2mol% | Et₃N | 3eq | 50°C | EtOAc | 16h | 46% |

**Table2**

| | | | | | | | | | | | | |
|---|---|---|---|---|---|---|---|---|---|---|---|---|
| 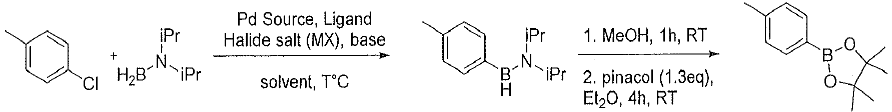 | | | | | | | | | | | | |

| Entry | Pd source | Pd loading | Ligand | Ligand loading | MX | MX loading | Base | Base loading | Temperature | Solvent | Time | Yield |
|---|---|---|---|---|---|---|---|---|---|---|---|---|
| 20 | Pd(OAc)₂ | 1mol% | XPhos | 3mol% | KI | 1mol% | Et₃N | 3eq | 90°C | Dioxane | 16h | 45% |
| 21 | Pd(OAc)₂ | 2mol% | DALPHOS | 4mol% | KI | 1mol% | Et₃N | 3eq | 110°C | Dioxane | 16h | 36% |
| 22 | Pd(OAc)₂ | 2mol% | 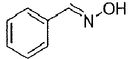 | 2mol% | KI | 1mol% | Et₃N | 3eq | 110°C | Dioxane | 16h | 22% |
| 23 | Pd(OAc)₂ | 2mol% | 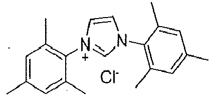 | 2mol% | KI | 1mol% | Et₃N | 3eq | 110°C | Dioxane | 16h | 23% |
| 24 | Pd(OAc)₂ | 1mol% | SPhos | 3mol% | KI | 1mol% | Et₃N | 3eq | 50°C | Dioxane | 16h | 18% |
| 25 | PdXPhos (2^{nd} generation) | 2mol% | - | - | KI | 2mol% | Et₃N | 3eq | 50°C | EtOAc t | 16h | 72% |
| 26 | Pd(OAc)₂ | 1mol% | XPhos | 3mol% | KI | 1mol% | Et₃N | 3eq | 20°C | Dioxane | 16h | 84% |
| 27 | Pd(OAc)₂ | 1mol% | XPhos | 3mol% | KI | 1mol% | Et₃N | 3eq | 50°C | Dioxane | 16h | 84% |
| 28 | Pd(OAc)₂ | 1mol% | XPhos | 3mol% | KI | 2mol% | Et₃N | 3eq | 50°C | MTBE | 16h | 51% |
| 29 | Pd(OAc)₂ | 1mol% | XPhos | 3mol% | KI | 1mol% | Et₃N | 3eq | 50°C | EtOAc t | 16h | 99% |
| 30 | Pd(OAc)₂ | 2mol% | XPhos | 2mol% | KI | 1mol% | Et₃N | 3eq | 90°C | Dioxane | 16h | 41% |
| 31 | Pd(OAc)₂ | 2mol% | XPhos | 6mol% | KI | 2mol% | - | - | 50°C | EtOAc t | 16h | 32% |
| 32 | Pd(OAc)₂ | 2mol% | XPhos | 4mol% | KI | 1mol% | Et₃N | 3eq | 90°C | Dioxane | 16h | 62% |
| 33 | Pd(OAc)₂ | 2mol% | XPhos | 6mol% | KI | 1mol% | Et₃N | 3eq | 90°C | Dioxane | 16h | 77% |
| 34 | Pd(OAc)₂ | 2mol% | PCy₃ | 6mol% | KI | 2mol% | Et₃N | 3eq | 50°C | EtOAc t | 16h | 9% |

**Table 3**

| | | | | | | | | | | | | |
|---|---|---|---|---|---|---|---|---|---|---|---|---|
| 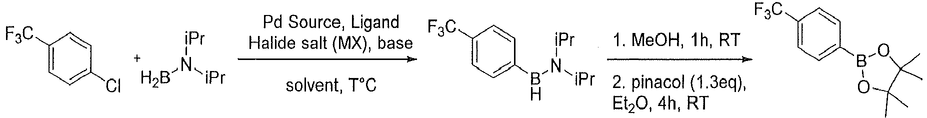 | | | | | | | | | | | | |

| Entry | Pd source | Pd loading | Ligand | Ligand loading | MX | MX loading | Base | Base loading | Temperature | Solvent | Time | Yield |
|---|---|---|---|---|---|---|---|---|---|---|---|---|
| 35 | PdXPhos (2^{nd} generation) | 2mol% | - | - | KI | 2mol% | Et₃N | 3eq | 50°C | EtOAc | 16h | 28% |
| 36 | PdCl₂ | 2mol% | XPhos | 6mol% | KI | 50mol% | Et₃N | 3eq | 50°C | EtOAc | 16h | 77% |
| 37 | PdBr₂ | 2mol% | XPhos | 6mol% | KI | 50mol% | Et₃N | 3eq | 50°C | EtOAc | 16h | 72% |
| 38 | PdI₂ | 2mol% | XPhos | 6mol% | KI | 50mol% | Et₃N | 3eq | 50°C | EtOAc | 16h | 67% |
| 39 | Pd(OAc)₂ | 2mol% | XPhos | 6mol% | KI | 50mol% | Et₃N | 3eq | 50°C | EtOAc | 16h | 99% |
| 40 | Pd(OAc)₂ | 2mol% | XPhos | 6mol% | KI | 50mol% | Et₃N | 3eq | 70°C | EtOAc | 16h | 95% |
| 41 | Pd(OAc)₂ | 2mol% | XPhos | 6mol% | KI | 2mol% | Et₃N | 3eq | 50°C | EtOAc | 16h | 60% |
| 42 | Pd(OAc)₂ | 2mol% | XPhos | 6mol% | KI | 2mol% | iPr₂NEt | 3eq | 50°C | EtOAc | 16h | 39% |
| 43 | Pd(OAc)₂ | 2mol% | XPhos | 6mol% | KI | 2mol% | iPr₂NH | 3eq | 50°C | EtOAc | 16h | 21% |
| 44 | Pd(OAc)₂ | 2mol% | XPhos | 6mol% | KI | 2mol% | Me₂NBu | 3eq | 50°C | EtOAc | 16h | 57% |
| 45 | Pd(OAc)₂ | 2mol% | XPhos | 6mol% | KI | 2mol% | pyridine | 3eq | 50°C | EtOAc | 16h | 10% |
| 46 | Pd(PCy₃)₂ | 2mol% | - | - | KI | 50mol% | Et₃N | 3eq | 50°C | EtOAc | 16h | 3.5% |
| 47 | Pd(OAc)₂ | 2mol% | AsPh₃ | 6mol% | KI | 50mol% | Et₃N | 3eq | 50°C | EtOAc | 16h | 9% |
| 48 | Pd(OAc)₂ | 2mol% | PCy₃ | 6mol% | KI | 2mol% | Et₃N | 3eq | 50°C | EtOAc | 16h | 11% |
| 49 | Pd(OAc)₂ | 2mol% | XPhos | 6mol% | KI | 2mol% | - | - | 50°C | EtOAc | 16h | 12% |
| 50 | Pd(OAc)₂ | 2mol% | XPhos | 6mol% | KI+NaCl | 25mol%+25mol% | Et₃N | 3eq | 50°C | EtOAc | 16h | 43% |
| 51 | Pd(OAc)₂ | 2mol% | XPhos | 6mol% | - | - | Et₃N | 3eq | 50°C | EtOAc | 16h | 3% |
| 52 | Pd(OAc)₂ | 2mol% | XPhos | 6mol% | KI | 5mol% | Et₃N | 3eq | 50°C | EtOAc | 16h | 54% |
| 53 | Pd(OAc)₂ | 2mol% | XPhos | 6mol% | KI | 20mol% | Et₃N | 3eq | 50°C | EtOAc | 16h | 73% |
| 54 | Pd(OAc)₂ | 2mol% | XPhos | 6mol% | KI | 100mol% | Et₃N | 3eq | 50°C | EtOAc | 16h | 81% |
| 55 | Pd(OAc)₂ | 2mol% | XPhos | 6mol% | KI | 200mol% | Et₃N | 3eq | 50°C | EtOAc | 16h | 78% |

EXAMPLES 1-10: Examples 1-10 are examples of suitable solvents to implement the process according to the invention and correspond to experimental condition (line 1, 9 to 12) in Table 1 and (line 20, 26 to 29) in Table 2.

The process of the present invention can be implemented by a two-stage process as illustrated according to the following reaction scheme:

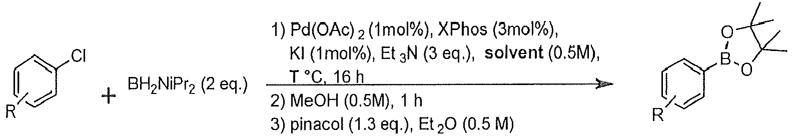

In the first stage, an aryl chloride compound of formula R-chlorophenyl wherein R is as defined in Table 1, or 2 (1 equivalent), reacts with an aminoborane compound of formula BH₂NiPr₂ (2 equivalents) in the presence of a suitable solvent at a concentration of 0.5 M (mol/L). In general, a suitable solvent is a solvent allowing the reaction to proceed and results in a yield > 1(%).

In particular examples, the reaction medium contains 1 mol% of Pd(OAc)₂, 3 mol% of XPhos, 1 mol% of KI, and 3 equivalents (eq.) Et₃N.

The results in Table 1 (line 1, 9 to 12) and table 2 (line 20, 26 to 29) show the yield in (%) obtained in the presence of various aprotic polar solvents Dioxane, MTBE and EtOAc.

Under these experimental conditions, reagents are mixed according to the invention at a temperature comprised between 20 and 90°C for 16 hours.

In a second stage, the amine-borane complex is submitted to alcoholysis using for example methanol (0.5 M), for at least one hour at room temperature.

The organic solvent of the second stage is preferably chosen from ethers, amines and aromatic hydrocarbons. Mention may in particular be made of diethyl ether, acetone, dioxane, THF, toluene and xylene.

This stage is then followed by an esterification reaction using pinacol (1.3 eq) in diethyl ether (0.5 M) at room temperature.

The process according to the invention contains therefore at least one aprotic polar solvent.

EXAMPLES 11 to 41: Examples 11 to 41 are examples corresponding to experimental conditions of lines 1 to 12 and 19 in Table 1, of lines 20 to 27, 30, and32 to 34 in Table 2 and lines 35 to 38, 47 and 48 in Table3

The process of the present invention can be implemented by a two-stage process as illustrated according to the following reaction scheme:

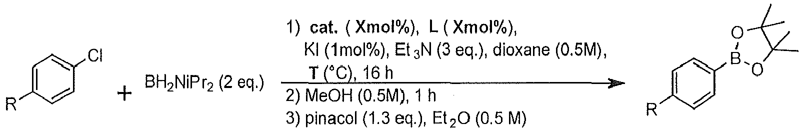

In the first stage, an aryl chloride compound of formula R-chlorophenyl wherein R is as defined in Table 1, or 2 (1 equivalent), reacts with an aminoborane compound of formula BH₂N*i*Pr₂ (2 equivalents) in the presence of a catalytic system comprising a transition metal and at least one ligand.

Examples in Table 1 line 1 to 2, line 9 to 12 and in Table 2 line 20 to 24, line 26 to 27, line 30 and line 32 to 33, 1 or 2 mol% of Pd(OAc)₂ is combined to 2, 3, 4 or 6 mol% of a ligand selected from the group DALPhos, XPhos, L*1, NHC Carbene and SPhos and the results show the yield in (%).
L*1 is

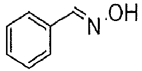

In particular examples, the reaction medium contains a halide salt (KI at 1 mol%), and 3 equivalents (eq.) of Et₃N in dioxane (0.5 M) .

Reagents are mixed according to the invention at a temperature comprised between 20 and 110 °C for 16 hours.

Examples in Table 2 line 30, 32 to 33: Various amounts of ligand XPhos are combined to constant amount of Pd(OAc)₂, so that the ratio metal:ligand is 1, 2 or 3 and the total amount of catalytic system is ranging from 0.8 to 8 equivalents.

Examples in Table 1 line 1 and 3 show that the yield of the arylation reaction is improved when the process is implemented in the presence of a catalytic system Pd(OAc)₂: XPhos in a ratio 1:3 at a concentration X (corresponding to 1 mol% Pd(OAc)₂ and to 3mol% XPhos) and at a concentration 5 times lower.

In another embodiment, the process according to present invention can be implemented as illustrated according to the following reaction scheme:

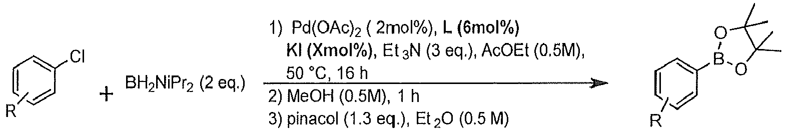

In the first stage, an aryl chloride compound of formula R-chlorophenyl wherein R is as defined in Table 1, 2 or 3 (1 equivalent), reacts with an aminoborane compound of formula BH₂N*i*Pr₂ (2 equivalents) in the presence of a catalytic system comprising a transition metal and at least one ligand.

Examples in Table 1 line 19, in Table 2 line 34 and in Table 3 lines 47 to 48, 2 mol% of Pd(OAc)₂ is combined to 6 mol% of a ligand selected from the group AsPh₃ and PCy₃ and the results show the yield in (%).

In particular examples, the reaction medium contains a various amount of halide salt (KI at 2 mol% or 50 mol%), and 3 equivalents (eq.) of Et₃N in EtOAc (0.5 M). The reaction proceeds at 50°C for 16 hours.

In another embodiment, the process according to present invention can be implemented as illustrated according to the following reaction scheme:

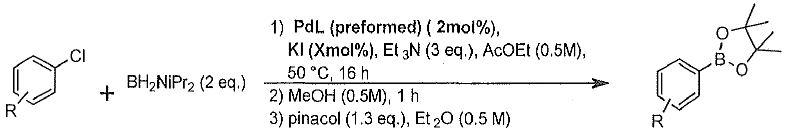

An aryl chloride compound of formula R-Chlorophenyl wherein R is as defined in Table 1, 2 and 3 (1 equivalent), reacts with an aminoborane compound of formula BH₂N*i*Pr₂ (2 equivalents) in the presence of a catalytic system comprising a transition metal and at least one ligand under a preformed complex (commercial source: Strem chemicals).

Examples Table 1 line 4 to 5, Table 2 line 25 and Table 3 line 35 and line 47: Preformed PdXPhos (2^{nd} generation) or Pd(PCy₃)₂, catalytic system was used at 2 mol%. The reaction medium contains a various amount of halide salt KI (2 mol% and 50 mol%), and 3 equivalents (eq.) of Et₃N in EtOAc (0.5 M). The reaction proceeds at 50°C for 16 hours.

Preformed catalyst is as active in the process according to the invention.

In another embodiment, the process according to present invention can be implemented as illustrated according to the following reaction scheme:

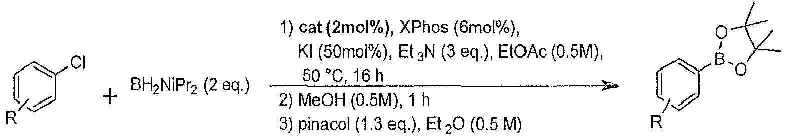

An aryl chloride compound of formula R-Chlorophenyl wherein R is as defined in Table 1 and 3 (1 equivalent), reacts with an aminoborane compound of formula BH₂N*i*Pr₂ (2 equivalents) in the presence of a catalytic system comprising a transition metal and at least one ligand.

Examples in table 1 line 6 to 8 and in table 3 line 36 to 38: Various catalysts PdCl₂, PdI₂, PdBr₂ were used at 2 mol% and combined to XPhos ligand (6 mol%) in a constant ratio of 1:3. The reaction medium contains a halide salt KI (0.5 eq), and 3 equivalents (eq.) of Et₃N in EtOAc (0.5 M). The reaction proceeds at 50°C for 16 hours.

Examples 11 to 37 show that the process according to the invention is implemented in the presence of a catalytic system. Yields are dose dependent and may be optimal at a metal:ligand ratio of 1:3 in an amount ranging between about 0.8 to 8 eq. Preformed catalysts are as active as heterogenous catalysts.

EXAMPLES 42 to 48: Examples of suitable amount of salt to implement the process according to the invention are illustrated in Table 3 and correspond to lines 39, 41 and 51 to 55

The process of the present invention can be implemented as illustrated according to the following reaction scheme:

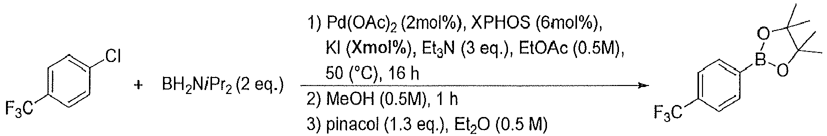

An aryl chloride compound of formula R-Chlorophenyl wherein R is as defined in Table 3 (1 equivalent), reacts with an aminoborane compound of formula BH₂N*i*Pr₂ (2 equivalents) in the absence of KI (table 3 line 51) or in the presence of various amounts KI.

The reaction medium contains a catalytic system comprising a transition metal Pd(OAc)₂ (2 mol%) and at least one ligand XPhos (6 mol%), and 3 equivalents (eq.) of Et₃N in EtOAc (0.5 M).

Examples Table 3 lines 39, 41 and 51 to 55 show that the process according to the invention is implemented in the absence of KI. The yield is improved in the presence of KI, preferably in the presence of 0.5 Eq.

EXAMPLES 49 to 61: Examples of suitable base to implement the process according to the invention are illustrated in Tables 1, 2 and 3and correspond to lines 13 to 17 in Table 1, lines 18 and 31 in Table 2 and lines 41 to 45 and 49 in Table 3

The process of the present invention can be implemented as illustrated according to the following reaction scheme:

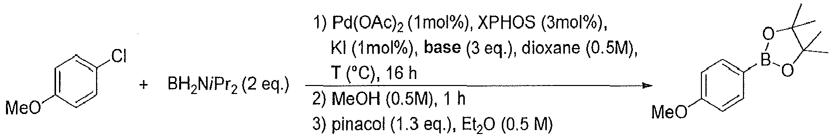

An aryl chloride compound of formula R-Chlorophenyl wherein R is as defined in Table 1 (1 equivalent), reacts with an aminoborane compound of formula BH₂N*i*Pr₂ (2 equivalents) in the presence of a base.

The reaction medium contains a base (3eq.), a catalytic system comprising a transition metal Pd(OAc)₂ (1 mol%) and at least one ligand XPhos (3 mol%) and a halide salt KI (1 mol%) in dioxane (0.5 M). The process is carried out at a temperature of 50°C or 100°C for 16 hours.

Examples Table 1 lines 13 to 17 correspond to a process according to the invention implemented in the presence of an inorganic base.

The process of the present invention can be implemented as illustrated according to the following reaction scheme:

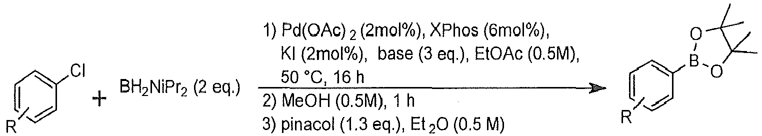

An aryl chloride compound of formula R-Chlorophenyl wherein R is as defined in Table 1, 2 and 3 (1 equivalent), reacts with an aminoborane compound of formula BH₂N*i*Pr₂ (2 equivalents) in the absence of base or in the presence of various bases.

The reaction medium contains a catalytic system comprising a transition metal Pd(OAc)₂ (2 mol%) and at least one ligand XPhos (6 mol%), and and a halide salt KI (50 mol%) in EtOAc (0.5 M). The process is carried out at a temperature of 50°C for 16 hours.

Examples Table 1 line 18, Table 2 line 31 and Table 3 lines 41 to 45 and line 49 show that the process according to the invention is implemented in the absence of base. The yield is improved in the presence of base, preferably in the presence of an organic base.

The base improves the yield.

The process according to the present invention allows the following compounds to be prepared :

### Example 62:

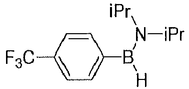

4-trifluoromethylphenyl-*N,N*-diisopropylaminoborane

### Example 63:

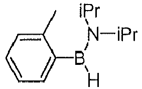

2-methylphenyl-*N,N*-diisopropylaminoborane

### Example 64:

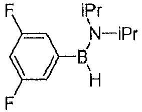

3,5-difluorophenyl-*N,N*-di*iso*propylaminoborane

### Example 65:

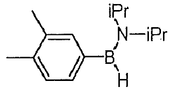

3,4-dimethylphenyl-*N,N*-di*iso*propylaminoborane

### Example 66:

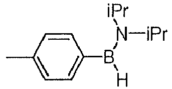

4-methylphenyl-*N,N*-di*iso*propylaminoborane

### Example 67:

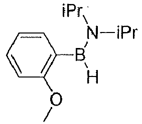

2-methoxyphenyl-*N,N*-di*iso*propylaminoborane

### Example 68:

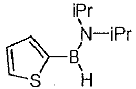

2-thiophenyl-*N,N*-di*iso*propylaminoborane

### Example 69:

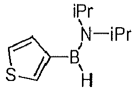

3-thiophenyl-*N,N*-di*iso*propylaminoborane

### Example 70:

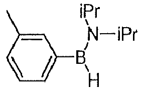

3-methylphenyl-*N,N*-di*iso*propylaminoborane

### Example 71:

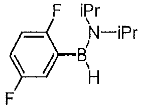

2,5-difluorophenyl-*N,N*-di*iso*propylaminoborane

### Example 72:

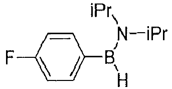

4-fluorophenyl-*N,N*-di*iso*propylaminoborane

### Example 73:

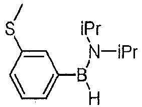

3-thiomethoxyphenyl-*N,N*-di*iso*propylaminoborane

### Example 74:

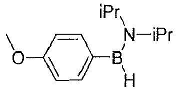

4-methoxyphenyl-*N,N*-di*iso*propylaminoborane

### Example 75:

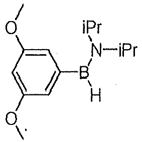

3,5-dimethoxyphenyl-*N,N*-di*iso*propylaminoborane

### Example 76:

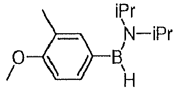

3-methyl-4-methoxyphenyl-*N,N*-di*iso*propylaminoborane

### Example 77:

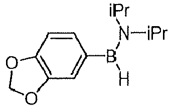

3,4-methylendioxyphenyl-*N,N*-di*iso*propylaminoborane

### Example 78:

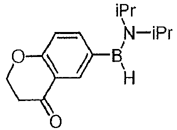

6-(*N,N*-di*iso*propylaminoboranyl)-2,3-dihydro-4H-chromen-4-one ne

### Example 79:

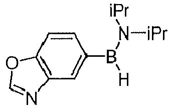

5-(*N,N*-di*iso*propylaminoboranyl)-1,3-benzoxazole

### Example 80:

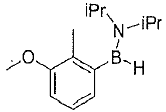

2-methyl-3-methoxyphenyl-*N,N*-di*iso*propylaminoborane

### Example 81:

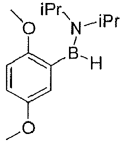

2,4-dimethoxyphenyl-*N,N*-di*iso*propylaminoborane

### Example 82:

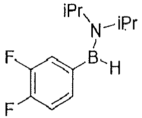

3,4-difluorophenyl-*N,N*-di*iso*propylaminoborane

### Example 83:

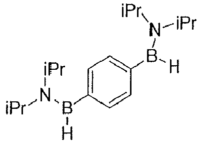

1,4-phenylene-bis-*N,N*-di*iso*propylaminoborane

### Example 84:

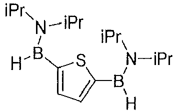

thiophene-2,5-diyl-bis-*N,N*-di*iso*propylaminoborane

### Example 85:

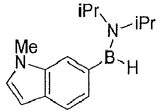

1-methyl-1*H*-indol-6-yl-*N,N*-di*iso*propylaminoborane

### Example 86:

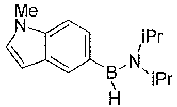

1-methyl-1*H*-indol-5-yl-*N,N*-di*iso*propylaminoborane

### Example 87:

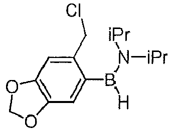

1-(6-(chloromethyl)benzo[*d*][1,3]dioxol-5-yl)-*N,N*-di*iso*propylaminoborane

### Example 88:

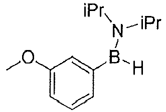

3-methoxyphenyl-*N,N*-di*iso*propylaminoborane

The process according to the present invention allows an aryl chloride to be substituted with at least one, and in particular two aminoborane compounds.

### Example 89: Preparation of 4,4,5,5-tetramethyl-2-(4-(trifluoromethyl)phenyl)-1,3,2-dioxaborolane

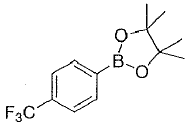

In a reaction flask charged with Pd(OAc)₂ (4.5 mg, 0.02 mmol), potassium iodide (83 mg, 0.5 mmol), and XPhos (28 mg, 0.06 mmol) under argon atmosphere was added, in this following order: anhydrous solvent (2 mL), Et₃N (0.4 mL, 3 mmol), 1-chloro-4-(trifluoromethyl)benzene (0.13 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄ filtered and concentrated under vacuum. The crude oil was passed through a pad of silica gel, eluting with Et₂O. The resulting filtrate was concentrated under vacuum to afford 4,4,5,5-tetramethyl-2-(4-(trifluoromethyl)phenyl)-1,3,2-dioxaborolane (256 mg, 94%). ¹H NMR (300 MHz, CDCl₃) δ 7.92 (d, 2H, *J* = 8.0 Hz), 7,62 (d, 2H, *J* = 8.0 Hz), 1,36 (s, 12H); ¹³C NMR (100 MHz, CDCl₃) δ 135.16, 133.19, 132.77, 129.71, 126.10, 124.53, 124.48, 124.43, 124.38, 122.50, 84.42, 25.00; ¹¹B NMR (96 MHz, CDCl₃) δ +31.19; ¹⁹F NMR (376,5 MHz, CDCl₃) δ -64.07; MS (EI) t_{R} = 6.984 min; m/z: 272 (M⁺, 100%).

### Example 90: Preparation of 4,4,5,5-tetramethyl-2-(p-tolyl)-1,3,2-dioxaborolane

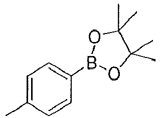

In a reaction flask charged with Pd(OAc)₂ (4.5 mg, 0.02 mmol), potassium iodide (83 mg, 0.5 mmol), and XPhos (28 mg, 0.06 mmol) under argon atmosphere was added, in this following order: anhydrous solvent (2 mL), Et₃N (0.4 mL, 3 mmol), 4-chlorotoluene (0.12 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford 4,4,5,5-tetramethyl-2-(*p*-tolyl)-1,3,2-dioxaborolane (215 mg, 99%). ¹H NMR (300 MHz, CDCl₃) δ 7.75 (d, 2H, *J* = 8.0 Hz), 7,23 (d, 2H, *J* = 8.0 Hz), 2.41 (s, 3H); 1,38 (s, 12H); ¹³C NMR (100 MHz, CDCl₃) δ 141.53, 134.95, 128.65, 83.75, 25.0, 21.87; ¹¹B NMR (96 MHz, CDCl₃) δ +30.99; MS (EI) t_{R} = 7.918 min; m/z: 218 (M⁺, 100%).

### Example 91: Preparation of 2-(4-methoxyphenyl)-4,4,5,5-tetramethyl-1,3,2-dioxaborolane

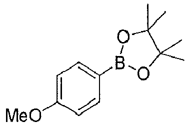

In a reaction flask charged with Pd(OAc)₂ (4.5 mg, 0.02 mmol), potassium iodide (3.3 mg, 0.02 mmol), and XPhos (28 mg, 0.06 mmol) under argon atmosphere was added, in this following order: anhydrous solvent (2 mL), Et₃N (0.4 mL, 3 mmol), 1-chloro-4-methoxybenzene (0.12 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄ filtered and concentrated under vacuum. The crude oil was passed through a pad of silica gel, eluting with Et₂O. The resulting filtrate was concentrated under vacuum to afford 2-(4-methoxyphenyl)-4,4,5,5-tetramethyl-1,3,2-dioxaborolane (231 mg, 99%). ¹H NMR (300 MHz, CDCl₃) δ 7.80 (d, 2H, *J* = 8.7 Hz), 6.94 (d, 2H, *J* = 8.7 Hz), 3.87 (s, 3H); 1,36 (s, 12H); ¹³C NMR (100 MHz, CDCl₃) δ 162.15, 136.51, 113.30, 83.54, 55.08, 24.86; ¹¹B NMR (96 MHz, CDCl₃) δ +30.11; MS (EI) t_{R} = 9.032 min; m/z: 234 (M⁺, 100%).

### Example 92: Preparation of 4,4,5,5-tetramethyl-2-(o-tolyl)-1,3,2-dioxaborolane

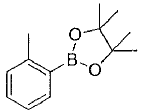

In a reaction flask charged with Pd(OAc)₂ (4.5 mg, 0.02 mmol), potassium iodide (83 mg, 0.5 mmol), and XPhos (28 mg, 0.06 mmol) under argon atmosphere was added, in this following order: anhydrous solvent (2 mL), Et₃N (0.4 mL, 3 mmol), 2-chlorotoluene (0.12 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄ filtered and concentrated under vacuum. The crude oil was passed through a pad of silica gel, eluting with Et₂O. The resulting filtrate was concentrated under vacuum to afford 4,4,5,5-tetramethyl-2-(*o*-tolyl)-1,3,2-dioxaborolane (192 mg, 88%). ¹H NMR (300 MHz, CDCl₃) δ 7.81 (dd, 1H, *J* = 7.6, 1.2 Hz), 7.37 (td, 1H, *J* = 7.5, 1.5 Hz), 7.23-7.19 (m, 2H); 2.59 (s, 3H); 1.40 (s, 12H); ¹³C NMR (100 MHz, CDCl₃) δ 144.97, 136.00,130.92, 129.91, 124.84, 83.54, 25.09, 22.36; ¹¹B NMR (96 MHz, CDCl₃) δ +31.47; MS (EI) t_{R} = 7.813 min; m/z: 218 (M⁺, 100%).

### Example 93: Preparation of 2-(3,5-difluorophenyl)-4,4,5,5-tetramethyl-1,3,2-dioxaborolane

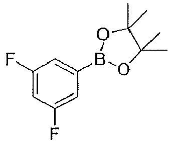

In a reaction flask charged with Pd(OAc)₂ (4.5 mg, 0.02 mmol), potassium iodide (83 mg, 0.5 mmol), and XPhos (28 mg, 0.06 mmol) under argon atmosphere were added, in this following order: anhydrous solvent (2 mL), Et₃N (0.4 mL, 3 mmol), 1-chloro-3,5-difluorobenzene (0.17 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄ filtered and concentrated under vacuum. The crude oil was passed through a pad of silica gel, eluting with Et₂O. The resulting filtrate was concentrated under vacuum to afford 2-(3,5-difluorophenyl)-4,4,5,5-tetramethyl-1,3,2-dioxaborolane (142 mg, 59%). ¹H NMR (300 MHz, CDCl₃) δ 7.31-7.30 (m, 2H), 6.93-6.87 (m, 1H), 1.35 (s, 12H); ¹³C NMR (100 MHz, CDCl₃) δ 164.24, 161.65, 116.89, 106.56, 84.62, 25.04; ¹¹B NMR (96 MHz, CDCl₃) δ +30.19; ¹⁹F NMR (96 MHz, CDCl₃) δ -112.30; MS (EI) t_{R} = 6.795 min; m/z: 240 (M⁺, 100%).

### Example 94: Preparation of 2-(3,4-dimethylphenyl)-4,4,5,5-tetramethyl-1,3,2-dioxaborolane

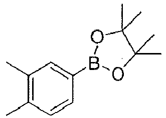

In a reaction flask charged with Pd(OAc)₂ (4.5 mg, 0.02 mmol), potassium iodide (83 mg, 0.5 mmol), and XPhos (28 mg, 0.06 mmol) under argon atmosphere were added, in this following order: anhydrous solvent (2 mL), Et₃N (0.4 mL, 3 mmol), 4-chloro-1,2-dimethylbenzene (0.14 mL, 1 mmol) and diisopropylaminoborane (0.3 mL, 2 nunol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄ filtered and concentrated under vacuum. The crude oil was passed through a pad of silica gel, eluting with Et₂O. The resulting filtrate was concentrated under vacuum to afford 2-(3,4-dimethylphenyl)-4,4,5,5-tetramethyl-1,3,2-dioxaborolane (229 mg, 99%). ¹H NMR (300 MHz, CDCl₃) δ 7.65 (s, 1H), 7.62 (d, 1H, *J* = 7.5 Hz), 7.21 (d, 1H, *J* = 7.5 Hz), 2.34 (s, 3H), 2.33 (s, 3H), 1,38 (s, 12H); ¹³C NMR (100 MHz, CDCl₃) δ 140.25, 136.07, 135.99, 132.54, 129.29, 83.70, 24.97, 20.13, 19.59; ¹¹B NMR (96 MHz, CDCl₃) δ +31.01; MS (EI) t_{R} = 8.713 min; m/z: 232 (M⁺, 100%).

### Example 95: Preparation of 2-(2-methoxyphenyl)-4,4,5,5-tetramethyl-1,3,2-dioxaborolane

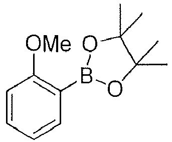

In a reaction flask charged with Pd(OAc)₂ (4.5 mg, 0.02 mmol), potassium iodide (3.3 mg, 0.02 mmol), and XPhos (28 mg, 0.06 mmol) under argon atmosphere was added, in this following order: anhydrous solvent (2 mL), Et₃N (0.4 mL, 3 mmol), 1-chloro-2-methoxybenzene (0.19 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford 2-(2-methoxyphenyl)-4,4,5,5-tetramethyl-1,3,2-dioxaborolane (206 mg, 88%). ¹H NMR (300 MHz, CDCl₃) δ 7.67 (dd, 1H, *J* = 7.3, 1.8 Hz), 7.62 (d, 1H, *J* = 7.5 Hz), 7.39 (ddd, 1H, *J* = 8.4, 7.4, 1.9 Hz), 6.94 (td, 1H, *J* = 7.3, 0.8 Hz), 6.86 (d, 1H, *J* = 8.3 Hz); 3.83 (s, 3H), 1,36 (s, 12H); ¹³C NMR (100 MHz, CDCl₃) δ 164.30, 136.82, 132.57, 120.32, 110.59, 83.57, 55.94, 24.96; ¹¹B NMR (96 MHz, CDCl₃) δ +31.02; MS (EI) t_{R} = 8.663 min; m/z: 234 (M⁺, 100%).

### Example 96: Preparation of 4,4,5,5-tetramethyl-2-(thiophen-2-yl)-1,3,2-dioxaborolane

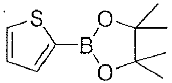

In a reaction flask charged with Pd(OAc)₂ (4.5 mg, 0.02 mmol), potassium iodide (83 mg, 0.5 mmol), and XPhos (28 mg, 0.06 mmol) under argon atmosphere was added, in this following order: anhydrous solvent (2 mL), Et₃N (0.4 mL, 3 mmol), 2-chlorothiophene (0.09 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford 4,4,5,5-tetramethyl-2-(thiophen-2-yl)-1,3,2-dioxaborolane (197 mg, 94%). ¹H NMR (300 MHz, CDCl₃) δ 7.71-7.67 (m, 2H), 7.24 (d, 1H, *J* = 4.7, 3.5 Hz), 1,39 (s, 12H); ¹³C NMR (100 MHz, CDCl₃) δ 137.30, 132.50, 128.36, 84.22, 24.91; ¹¹B NMR (96 MHz, CDCl₃) δ +29.05; MS (EI) t_{R} = 7.346 min; m/z: 210 (M⁺, 100%).

### Example 97: Preparation of 4,4,5,5-tetramethyl-2-(thiophen-3-yl)-1,3,2-dioxaborolane

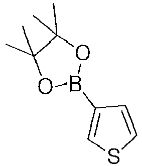

In a reaction flask charged with Pd(OAc)₂ (4.5 mg, 0.02 mmol), potassium iodide (83 mg, 0.5 mmol), and XPhos (28 mg, 0.06 mmol) under argon atmosphere was added, in this following order: anhydrous solvent (2 mL), Et₃N (0.4 mL, 3 mmol), 3-chlorothiophene (0.09 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄ filtered and concentrated under vacuum. The crude oil was passed through a pad of silica gel, eluting with Et₂O. The resulting filtrate was concentrated under vacuum to afford 4,4,5,5-tetramethyl-2-(thiophen-3-yl)-1,3,2-dioxaborolane (149 mg, 71%). ¹H NMR (300 MHz, CDCl₃) δ 7.95 (dd, 1H, *J* = 2.7, 1.0 Hz), 7.44 (dd, 1H, *J* = 4.8, 1.0 Hz), 7.3 6 (dd, 1H, *J* = 4.8, 2.7 Hz), 1,36 (s, 12H); ¹³C NMR (100 MHz, CDCl₃) δ 136.66, 132.06, 125.52, 83.86, 25.04; ¹¹B NMR (96 MHz, CDCl₃) δ ++28.99; MS (EI) t_{R} = 7.258 min; m/z: 210 (M⁺, 100%).

### Example 98: Preparation of 4,4,5,5-tetramethyl-2-(m-tolyl)-1,3,2-dioxaborolane

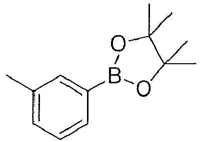

In a reaction flask charged with Pd(OAc)₂ (4.5 mg, 0.02 mmol), potassium iodide (3.3 mg, 0.02 mmol), and XPhos (28 mg, 0.06 mmol) under argon atmosphere was added, in this following order: anhydrous solvent (2 mL), Et₃N (0.4 mL, 3 mmol), 3-chlorotoluene (0.17 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford 4,4,5,5-tetramethyl-2-(*m-*tolyl)-1,3,2-dioxaborolane (192 mg, 88%). ¹H NMR (300 MHz, CDCl₃) δ 7.64-7.60 (m, 2H), 7.28-7.26 (m, 2H,); 2.36 (s, 3H); 1,35 (s, 12H); ¹³C NMR (100 MHz, CDCl₃) δ 141.53, 134.95, 128.65, 83.75, 25.00, 21.87; ¹¹B NMR (96 MHz, CDCl₃) δ +31.15; MS (EI) t_{R} = 7.837 min; m/z: 218 (M⁺, 100%).

### Example 99: Preparation of 2-(2,5-difluorophenyl)-4,4,5,5-tetramethyl-1,3,2-dioxaborolane

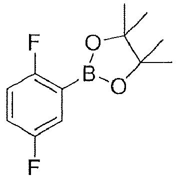

In a reaction flask charged with Pd(OAc)₂ (4.5 mg, 0.02 mmol), potassium iodide (83 mg, 0.5 mmol), and XPhos (28 mg, 0.06 mmol) under argon atmosphere was added, in this following order: anhydrous solvent (2 mL), Et₃N (0.4 mL, 3 mmol), 2-chloro-1,4-difluorobenzene (0.17 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄ filtered and concentrated under vacuum. The crude oil was passed through a pad of silica gel, eluting with Et₂O. The resulting filtrate was concentrated under vacuum to afford 2-(2,5-difluorophenyl)-4,4,5,5-tetramethyl-1,3,2-dioxaborolane (149 mg, 62%). ¹H NMR (300 MHz, CDCl₃) δ 7.43-7.39 (m, 1H), 7.14-7.08 (m, 1H), 7.03-6.97 (m, 1H), 1.38 (s, 12H); ¹³C NMR (100 MHz, CDCl₃) δ 164.34, 161.88, 159.79, 157.38, 122.54, 122.45, 122.32, 122.23, 120.01, 119.92, 119.77, 119.68, 116.88, 116.61, 116.53, 84.38, 24.93; ¹¹B NMR (96 MHz, CDCl₃) δ +29.91; ¹⁹F NMR (96 MHz, CDCl₃) δ -110.66, 121.86; MS (EI) t_{R} = 7.356 min; m/z: 240 (M⁺, 100%).

### Example 100: Preparation of 2-(4-fluorophenyl)-4,4,5,5-tetramethyl-1,3,2-dioxaborolane

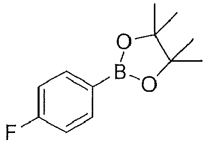

In a reaction flask charged with Pd(OAc)₂ (4.5 mg, 0.02 mmol), potassium iodide (3.3 mg, 0.02 mmol), and XPhos (28 mg, 0.06 mmol) under argon atmosphere was added, in this following order: anhydrous solvent (2 mL), Et₃N (0.4 mL, 3 mmol), 1-chloro-4-fluorobenzene (0.16 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄ filtered and concentrated under vacuum. The crude oil was passed through a pad of silica gel, eluting with Et₂O. The resulting filtrate was concentrated under vacuum to afford 2-(4-fluorophenyl)-4,4,5,5-tetramethyl-1,3,2-dioxaborolane (219 mg, 99%). ¹H NMR (300 MHz, CDCl₃) δ 7.85-7.82 (m, 2H), 7.10-7.06 (m, 2H), 1,39 (s, 12H); ¹³C NMR (100 MHz, CDCl₃) δ 166.19, 164.07, 137.24, 115.33, 83.88, 25.05; ¹¹B NMR (96 MHz, CDCl₃) δ +30.62; ¹⁹F NMR (96 MHz, CDCl₃) δ -109.65; MS (EI) t_{R} = 7.049 min; m/z: 222 (M⁺, 100%).

### Example 101: Preparation of 4,4,5,5-tetramethyl-2-(3-(methylthio)phenyl)-1,3,2-dioxaborolane

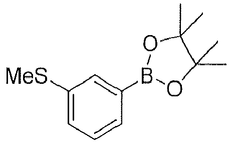

In a reaction flask charged with Pd(OAc)₂ (4.5 mg, 0.02 mmol), potassium iodide (3.3 mg, 0.02 mmol), and XPhos (28 mg, 0,06 mmol) under argon atmosphere was added, in this following order: anhydrous solvent (2 mL), Et₃N (0.4 mL, 3 mmol), (3-chlorophenyl)(methyl)sulfane (0.2 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford 4,4,5,5-tetramethyl-2-(3-(methylthio)phenyl)-1,3,2-dioxaborolane (247 mg, 99%). ¹H NMR (300 MHz, CDCl₃) δ 7.71-7.70 (m, 1H), 7.52 (dt, 1H, *J* 7.1, 1.2 Hz), 7.39-7.32 (m, 1H), 7.31-7.27 (m, 1H), 2.50 (s, 3H), 1.34 (s, 12H); ¹³C NMR (100 MHz, CDCl₃) δ 137.99, 133.00, 131.56, 129.70, 128.32, 84.04, 24.99, 16.08; ¹¹B NMR (96 MHz, CDCl₃) δ +30.48; MS (EI) t_{R} = 9.999 min; m/z: 250 (M⁺, 100%).

### Example 102: Preparation of 2-(3-methoxy-2-methylphenyl)-4,4,5,5-tetramethyl-1,3,2-dioxaborolane

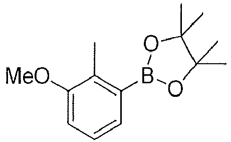

In a reaction flask charged with Pd(OAc)₂ (4.5 mg, 0.02 mmol), potassium iodide (83 mg, 0.5 mmol), and XPhos (28 mg, 0.06 mmol) under argon atmosphere was added, in this following order: anhydrous solvent (2 mL), Et₃N (0.4 mL, 3 mmol), 1-chloro-3-methoxy-2-methylbenzene (0.14 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford 2-(3-methoxy-2-methylphenyl)-4,4,5,5-tetramethyl-1,3,2-dioxaborolane (252 mg, 92%). ¹H NMR (300 MHz, CDCl₃) δ 7.35 (dd, 1H, *J* 7.4, 0.9 Hz), 7.17 (t, 1H, *J* 7.8 Hz), 6.96 (dd, 1H, *J* 7.5, 1.0 Hz), 3.82 (s, 3H), 2.44 (s, 3H), 1.36 (s, 12H); ¹³C NMR (100 MHz, CDCl₃) δ 157.62, 133.43, 127.69, 125.93, 112.74, 83.60, 55.57, 24.99, 14.75; ¹¹B NMR (96 MHz, CDCl₃) δ +31.52; MS (EI) t_{R} = 9.496 min; m/z: 248 (M⁺, 100%).

### Example 103: Preparation of 2-(3,5-dimethoxyphenyl)-4,4,5,5-tetramethyl-1,3,2-dioxaborolane

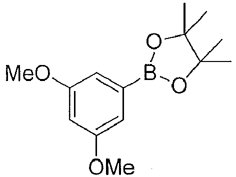

In a reaction flask charged with Pd(OAc)₂ (4.5 mg, 0.02 mmol), potassium iodide (83 mg, 0.5 mmol), and XPhos (28 mg, 0.06 mmol) under argon atmosphere was added, in this following order: anhydrous solvent (2 mL), Et₃N (0.4 mL, 3 mmol), 1-chloro-3,5-dimethoxybenzene (0.17 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford 2-(3,5-dimethoxyphenyl)-4,4,5,5-tetramethyl-1,3,2-dioxaborolane (254 mg, 95%). ¹H NMR (300 MHz, CDCl₃) δ 7.35 (dd, 1H, J 7.4, 0.9 Hz), 7.17 (t, 1H, J 7.8 Hz), 6.96 (dd, 1H, J 7.5, 1.0 Hz), 3.82 (s, 3H), 2.44 (s, 3H), 1.36 (s, 12H); ¹³C NMR (100 MHz, CDCl₃) δ 160.50, 111.72, 104.59, 83.96, 55.47, 24.94; ¹¹B NMR (96 MHz, CDCl₃) δ +30.29; MS (EI) t_{R} = 10.527 min; m/z: 264 (M⁺, 100%).

### Example 104: Preparation of 2-(2,5-dimethoxyphenyl)-4,4,5,5-tetramethyl-1,3,2-dioxaborolane

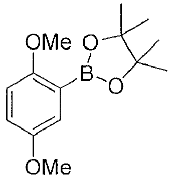

In a reaction flask charged with Pd(OAc)₂ (4.5 mg, 0.02 mmol), potassium iodide (83 mg, 0.5 mmol), and XPhos (28 mg, 0,06 mmol) under argon atmosphere was added, in this following order: anhydrous solvent (2 mL), Et₃N (0.4 mL, 3 mmol), 1-chloro-3,5-dimethoxybenzene (0.17 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford 2-(3,5-dimethoxyphenyl)-4,4,5,5-tetramethyl-1,3,2-dioxaborolane (257 mg, 97%). ¹H NMR (300 MHz, CDCl₃) δ 7.21 (d, 1H, *J* 3.2 Hz), 6.93 (dd, 1H, *J* 8.9, 3.2 Hz), 6.83 (d, 1H, *J* 8.9 Hz), 3.79 (s, 3H), 3.78 (s, 3H), 1.35 (s, 12H); ¹³C NMR (100 MHz, CDCl₃) δ 158.61, 153.29, 121.09, 118.04, 114.66, 83.56, 56.75, 55.82, 24.81; ¹¹B NMR (96 MHz, CDCl₃) δ +30.29; MS (EI) t_{R} = 10.173 min; m/z: 264 (M⁺, 100%).

### Example 105: Preparation of 2-(4-methoxy-3-methylphenyl)-4,4,5,5-tetramethyl-1,3,2-dioxaborolane

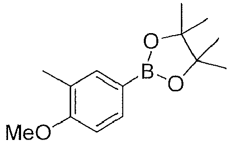

In a reaction flask charged with Pd(OAc)₂ (4.5 mg, 0.02 mmol), potassium iodide (83 mg, 0.5 mmol), and XPhos (28 mg, 0;06 mmol) under argon atmosphere was added, in this following order: anhydrous solvent (2 mL), Et₃N (0.4 mL, 3 mmol), 4-chloro-1-methoxy-2-methylbenzene (0.16 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄ filtered and concentrated under vacuum. The crude oil was passed through a pad of silica gel, eluting with Et₂O. The resulting filtrate was concentrated under vacuum to afford 2-(4-methoxy-3-methylphenyl)-4,4,5,5-tetramethyl-1,3,2-dioxaborolane (189 mg, 76%). ¹H NMR (300 MHz, CDCl₃) δ 7.69 (d, 1H, *J* 8.1 Hz), 7.64 (s, 1H), 6.87 (d, 1H, *J* 8.1 Hz), 3.89 (s, 3H), 2.26 (s, 3H), 1.38 (s, 12H); ¹³C NMR (100 MHz, CDCl₃) δ 160.44, 137.15, 134.29, 125.90, 109.26, 83.50, 55.18, 24.87, 15.99; ¹¹B NMR (96 MHz, CDCl₃) δ +31.03; MS (EI) t_{R} = 9.448 min; m/z: 248 (M⁺, 100%).

### Example 106: Preparation of 5-(4,4,5,5-tetramethyl-1,3,2-dioxaborolan-2-yl)-1,3-benzodioxole

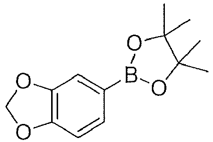

In a reaction flask charged with Pd(OAc)₂ (4.5 mg, 0.02 mmol), potassium iodide (83 mg, 0.5 mmol), and XPhos (28 mg, 0.06 mmol) under argon atmosphere was added, in this following order: anhydrous solvent (2 mL), Et₃N (0.4 mL, 3 mmol), 5-chlorobenzo[*d*][1,3]dioxole (0.12 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution ofHCl (0.1 N, 2x10 mL), followed by an aqueous solution of CuCl₂ (50g/L, 3x10 mL), dried over anhydrous Na₂SO₄ filtered and concentrated under vacuum. The crude oil was passed through a pad of silica gel, eluting with Et₂O. The resulting filtrate was concentrated under vacuum to afford 5- (4,4,5,5-tetramethyl-1,3,2-dioxaborolan-2-yl)-1,3-benzodioxole (218 mg, 88%). ¹H NMR (300 MHz, CDCl₃) δ 7.35 (dd, 1H, *J* 7.7, 1.1 Hz), 7.24 (d, 1H, *J* 0.8 Hz), 6.83 (d, 1H, J 7.7 Hz), 5.95 (s, 2H), 1.32 (s, 12H); ¹³C NMR (100 MHz, CDCl₃) δ 163.48, 161.84, 130.42, 129.59, 121.04, 118.38, 84.24, 25.0; ¹¹B NMR (96 MHz, CDCl₃) δ +30.63; MS (EI) t_{R} = 9.594 min; m/z: 248 (M⁺, 100%).

### Example 107: Preparation of 2,3-dihydro-6-(4,4,5,5-tetramethyl-1,3,2-dioxaborolan-2-yl)-4H-1-Benzopyran-4-one

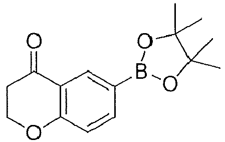

In a reaction flask charged with Pd(OAc)₂ (4.5 mg, 0.02 mmol), potassium iodide (83 mg, 0.5 mmol), and XPhos (28 mg, 0.06 mmol) under argon atmosphere was added, in this following order: anhydrous solvent (2 mL), Et₃N (0.4 mL, 3 mmol), 6-chlorochroman-4-one (183 mg, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄ filtered and concentrated under vacuum. The crude oil was passed through a pad of silica gel, eluting with Et₂O. The resulting filtrate was concentrated under vacuum to afford 2,3-dihydro-6-(4,4,5,5-tetramethyl-1,3,2-dioxaborolan-2-yl)-4H-1-Benzopyran-4-one (242 mg, 89%). ¹H NMR (300 MHz, CDCl₃) δ 8.36 (d, 1H, *J* 1.6 Hz), 7.85 (dd, 1H, *J* 8.3, 1.7 Hz), 6.92 (d, 1H, *J* 8.3 Hz), 4.51 (t, 2H, *J* 8 Hz), 2.78 (t, 2H, *J* 8 Hz), 1.30 (s, 12H); ¹³C NMR (100 MHz, CDCl₃) δ 191.67, 164.14, 142.14, 134.85, 117.38, 84.04, 67.16, 37.87, 24.97; ¹¹B NMR (96 MHz, CDCl₃) δ +30.86; MS (EI) t_{R} = 14.150 min; m/z: 274 (M⁺, 100%).

### Example 108: Preparation of 2-(3,4-difluorophenyl)-4,4,5,5-tetramethyl-1,3,2-dioxaborolane

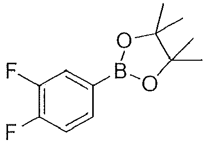

In a reaction flask charged with Pd(OAc)₂ (4.5 mg, 0.02 mmol), potassium iodide (166 mg, 1 mmol), and XPhos (28 mg, 0.06 mmol) under argon atmosphere was added, in this following order: anhydrous solvent (2 mL), Et₃N (0.4 mL, 3 mmol), 4-chloro-1,2-difluorobenzene (0.11 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄ filtered and concentrated under vacuum. The crude oil was passed through a pad of silica gel, eluting with Et₂O. The resulting filtrate was concentrated under vacuum to afford 2-(3,4-difluorophenyl)-4,4,5,5-tetramethyl-1,3,2-dioxaborolane (274 mg, 99%). ¹H NMR (300 MHz, CDCl₃) δ 7.61-7.50 (m, 2H), 7.14 (dt, 1H, *J* = 10.6, 7.9 Hz), 1.34 (s, 12H); ¹³C NMR (100 MHz, CDCl₃) δ 153.65, 153.57, 151.98, 151.90, 151.18, 151.10, 149.53, 149.45, 131.53, 123.49, 123.39, 117.11, 117.00, 84.37, 24.96; ¹¹B NMR (96 MHz, CDCl₃) δ +30.15; ¹⁹F NMR (96 MHz, CDCl₃) δ -135.10, -140.74; MS (EI) t_{R} = 7.078 min; m/z: 240 (M⁺, 100%).

### Example109: Preparation of 2-(6-(chloromethyl)benzo[d][1,3]dioxol-5-yl)-4,4,5,5-tetramethyl-1,3,2-dioxaborolane

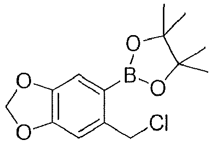

In a reaction flask charged with Pd(OAc)₂ (4.5 mg, 0.02 mmol), potassium iodide (83 mg, 0.5 mmol), and XPhos (28 mg, 0.06 mmol) under argon atmosphere was added, in this following order: anhydrous solvent (2 mL), Et₃N (0.4 mL, 3 mmol), 5-chloro-6-(chloromethyl)benzo[*d*][1,3]dioxole (205 mg, 1 mmol) and diisopropylaminoborane (0.3 mL, 2 mmol). The reaction was then heated at 50 °C. **time is not given** After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄ filtered and concentrated under vacuum. The crude oil was passed through a pad of silica gel, eluting with Et₂O. The resulting filtrate was concentrated under vacuum to afford 2- (6-(chloromethyl)benzo[*d*][1,3]dioxol-5-yl)-4,4,5,5-tetramethyl-1,3,2-dioxaborolane (268 mg, 91%). ¹H NMR (300 MHz, CDCl₃) δ 6.80 (s, 1H), 6.71 (s, 1H), 5.91 (s, 2H), 2.27 (s, 2H), 1.24 (s, 12H); ¹³C NMR (100 MHz, CDCl₃) δ 146.58, 145.98, 130.36, 125.15, 110.52, 109.65, 101.51, 83.70, 24.87; ¹¹B NMR (96 MHz, CDCl₃) δ +33.06; MS (EI) t_{R} = 11.276 min; m/z: 296 (M⁺, 100%).

### Example 110: Preparation of 1,4-bis(4,4,5,5-tetramethyl-1,3,2-dioxaborolan-2-yl)benzene

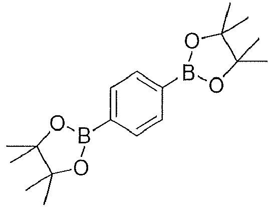

In a reaction flask charged with Pd(OAc)₂ (4.5 mg, 0.02 mmol), potassium iodide (83 mg, 0.5 mmol), and XPhos (28 mg, 0,06 mmol) under argon atmosphere was added, in this following order: anhydrous solvent (2 mL), Et₃N (0.4 mL, 3 mmol), 1-chloro-4-iodobenzene (239 mg, 1 mmol) and diisopropylaminoborane (0.6 mL, 4 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (306 mg, 2.6 mmol) in Et₂O (4 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford 1,4-bis(4,4,5,5-tetramethyl-1,3,2-dioxaborolan-2-yl)benzene (321 mg, 97%). ¹H NMR (300 MHz, CDCl₃) δ 7.80 (s, 2H), 1.35 (s, 12H); ¹³C NMR (100 MHz, CDCl₃) δ 134.02, 83.98, 26.01; ¹¹B NMR (96 MHz, CDCl₃) δ +30.18; MS (EI) t_{R} = 13.061 min; m/z: 330 (M⁺, 100%).

### Example 111: Preparation of 5-(4,4,5,5-tetramethyl-1,3,2-dioxaborolan-2-yl)-benzoxazole

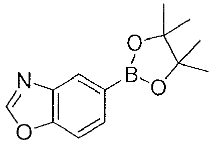

In a reaction flask charged with Pd(OAc)₂ (4.5 mg, 0.02 mmol), potassium iodide (166 mg, 1 mmol), and XPhos (28 mg, 0.06 mmol) under argon atmosphere was added, in this following order: anhydrous solvent (2 mL), Et₃N (0.4 mL, 3 mmol), 5-chlorobenzo[d]oxazole (158 mg, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution ofHCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford 5-(4,4,5,5-tetramethyl-1,3,2-dioxaborolan-2-yl)-benzoxazole (154 mg, 63%). ¹H NMR (300 MHz, CDCl₃) δ 8.23 (s, 1H), 8.07 (s, 1H), 7.82 (d, 1H, *J* 8.3 Hz), 7.53 (d, 1H, *J* 8.2 Hz), 1.32 (s, 12H); ¹³C NMR (100 MHz, CDCl₃) δ 152.56, 152.19, 139.87, 132.16, 127.50, 110.47, 84.03, 24.91; ¹¹B NMR (96 MHz, CDCl₃) δ +30.49; MS (EI) t_{R} = 9.774 min; m/z: 245 (M⁺, 100%).

### Example 112: Preparation of 2,5-bis(4,4,5,5-tetramethyl-1,3,2-dioxaborolan-2-yl)thiophene

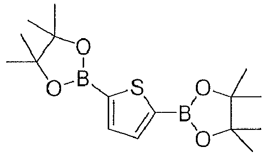

In a reaction flask charged with Pd(OAc)₂ (4.5 mg, 0.02 mmol), potassium iodide (83 mg, 0.5 mmol), and XPhos (28 mg, 0.06 mmol) under argon atmosphere was added, in this following order: anhydrous solvent (2 mL), Et₃N (0.4 mL, 3 mmol), 2,5-dichlorothiophene (0.11 mL, 1 mmol) and diisopropylaminoborane (0.6 mL, 4 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (306 mg, 2.6 mmol) in Et₂O (4 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford 2,5-bis(4,4,5,5-tetramethyl-1,3,2-dioxaborolan-2-yl)thiophene (236 mg, 70%).

¹H NMR (300 MHz, CDCl₃) δ 7.67 (s, 2H), 1.34 (s, 24H); ¹³C NMR (100 MHz, CDCl₃) δ 137.80, 84.25, 24.89; ¹¹B NMR (96 MHz, CDCl₃) δ +29.49; MS (EI) t_{R} = 13.150 min; m/z: 336 (M⁺, 100%).

### Example 113: Preparation of 1-methyl-6-(4,4,5,5-tetramethyl-1,3,2-dioxaborolan-2-yl)-1H-Indole

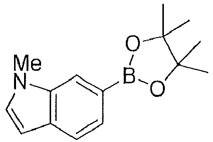

In a reaction flask charged with Pd(OAc)₂ (4.5 mg, 0.02 mmol), potassium iodide (83 mg, 0.5 mmol), and XPhos (28 mg, 0.06 mmol) under argon atmosphere was added, in this following order: anhydrous solvent (2 mL), Et₃N (0.4 mL, 3 mmol), 6-chloro-1-methyl-1*H*-indole (166 mg, 0.5 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford 1-methyl-6-(4,4,5,5-tetramethyl-1,3,2-dioxaborolan-2-yl)-1*H*-Indole (185 mg, 72%). ¹H NMR (300 MHz, CDCl₃) δ 7.86 (d, 1H, *J* 0.6 Hz), 7.65 (dd, 1H, *J* 7.9, 0.7 Hz), 7.57 (dd, 1H, *J* 7.9, 0.7 Hz), 7.11 (d, 1H, *J* 3.1 Hz), 6.49 (dd, 1H, *J* 3.0, 0.8 Hz), 3.84 (s, 3H), 1.39 (s, 12H); ¹³C NMR (100 MHz, CDCl₃) δ 136.56, 131.18, 130.31, 125.29, 120.28, 116.31, 101.10, 83.66, 33.09, 25.04; ¹¹B NMR (96 MHz, CDCl₃) δ +32.32; MS (EI) t_{R} = 12.683 min; m/z: 257 (M⁺, 100%).

### Example 114: Preparation of 1-methyl-5-(4,4,5,5-tetramethyl-1,3,2-dioxaborolan-2-yl)-1H-Indole

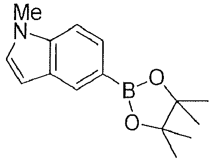

In a reaction flask charged with Pd(OAc)₂ (4.5 mg, 0.02 mmol), potassium iodide (83 mg, 0.5 mmol), and XPhos (28 mg, 0.06 mmol) under argon atmosphere was added, in this following order: anhydrous solvent (2 mL), Et₃N (0.4 mL, 3 mmol), 5-chloro-1-methyl-1*H*-indole (166 mg, 0.5 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford 1-methyl-5-(4,4,5,5-tetramethyl-1,3,2-dioxaborolan-2-yl)-1*H*-Indole (125 mg, 49%). ¹H NMR (300 MHz, CDCl₃) δ 8.19 (s, 1H), 7.70 (d, 1H, *J* 8.3 Hz), 7.33 (d, 1H, J 8.3 Hz), 7.04 (d, 1H, *J* 3.1 Hz), 6.52 (d, 1H, *J* 3.1 Hz), 3.79 (s, 3H), 1.39 (s, 12H); ¹³C NMR (100 MHz, CDCl₃) δ 138.74, 129.01, 128.93, 128.33, 127.73, 108.69, 101.77, 83.50, 32.90, 25.0; ¹¹B NMR (96 MHz, CDCl₃) δ +31.55; MS (EI) t_{R} = 13.172 min; m/z: 257 (M⁺, 100%).

### Example 115: Preparation of 2-(3-methoxyphenyl)-4,4,5,5-tetramethyl-1,3,2-dioxaborolane

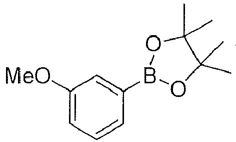

In a reaction flask charged with Pd(OAc)₂ (4.5 mg, 0.02 mmol), potassium iodide (3.3 mg, 0.02 mmol), and XPhos (28 mg, 0.06 mmol) under argon atmosphere was added, in this following order: anhydrous solvent (2 mL), Et₃N (0.4 mL, 3 mmol), 1-chloro-3-methoxybenzene (0.12 mL, 1 mmol) and diisopropylaminoborane (0.3 mL, 2 mmol). The reaction was then heated at 50 °C. After total consumption of either starting material, the reaction was cooled at -5 °C, quenched with anhydrous MeOH (2 mL) and stirred for 1 h at room temperature. All volatiles were removed under vacuum before adding pinacol (153 mg, 1.3 mmol) in Et₂O (2 mL), and the mixture was stirred for 4 h at room temperature. The reaction mixture was diluted with Et₂O (10 mL), and the organic phase was washed first with a solution of HCl (0.1 N, 2x10 mL), followed by an aqueous solution of CuCl₂ (50g/L, 3x10 mL), dried over anhydrous Na₂SO₄, filtered and concentrated under vacuum. The crude oil was passed through a pad of silica gel, eluting with Et₂O. The resulting filtrate was concentrated under vacuum to afford 2-(3-methoxyphenyl)-4,4,5,5-tetramethyl-1,3,2-dioxaborolane (229 mg, 98%). ¹H NMR (300 MHz, CDCl₃) δ 7.42-7.39 (m, 1H), 7.34-7.27 (m, 2H),7.01 (ddd, 1H, J = 8.2, 2.8, 1.1 Hz), 3.84 (s, 3H), 1,35 (s, 12H); ¹³C NMR (100 MHz, CDCl₃) δ 159.19, 129.08, 127.33, 118.84, 118.05, 83.97, 55.39, 25.01; ¹¹B NMR (96 MHz, CDCl₃) δ +31.66; MS (EI) t_{R} = 8.872 min; m/z: 234 (M⁺, 100%).

## Claims

1. Use of an aryl chloride and of an aminoborane compound in the presence of a catalytic system for the implementation of a process involving an arylation reaction leading to an aminoarylborane compound or a derivative thereof.

2. Process for the preparation of an aminoarylborane compound, or a derivative thereof, which comprises:
(1) a step of arylation by reacting an aryl chloride with an aminoborane compound in the presence of a catalytic system, in a reaction medium containing a solvent, to obtain an aminoarylborane compound, optionally isolated and purified,
(2) an optional step of converting the aminoarylborane compound by refunctionalisation into an arylborane derivative.

3. Process according to claim 2, wherein said catalytic system, optionally under the form of a preformed complex, comprises
- a transition metal, in particular a transition metal selected from the group comprising Pd, Cu, Fe, Ni, or Pt, and
- at least a ligand, in particular a ligand selected from the group comprising a trialkylphosphine, a dialkylarylphosphine, more particularly an alkylbiarylphosphine, a C-based ligand, more particularly a N-heterocyclic carbene, and a N-based ligand, more particularly an oxime ligand.

4. Process according to any one of claims 2 to 3, wherein the arylation reaction is conducted in presence of a halide salt, in particular a halide salt selected from the group comprising KI, NaI, CsI, KBr, NaBr, CsBr, KCl, NaCl, CsCl, more particularly KI and NaI or a mixture thereof.

5. Process according to claim 4 wherein the amount of halide salt is comprised from 0.001 % to 50 %, in particular from 0.01 % to 20 %, and even more particularly from 0.1% to 20% or from 0.1% to 5% expressed as a percentage of the number of moles of the aryl chloride (molar percentage) in the arylation reaction.

6. Process according to anyone of claims 2 to 5, for the preparation of
■ an aminoarylborane compound of the following formula: 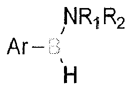 wherein:
- H is a hydrogen atom
- B is a boron atom
- Ar is an aryl group which is optionally substituted, in particular a heteroaryl group containing one or several heteroatom(s) selected from O, N or S,
- NR¹R² is an amino group, wherein R¹ and R², are identical or different, selected from the group comprising:
• a hydrogen atom,
• an optionally substituted hydrocarbon group, in particular
• a linear alkyl group having from 1 to 20 carbon atoms,
• a branched alkyl group having from 3 to 20 carbon atoms,
• a cycloalkyl group having from 3 to 20 carbon atoms,
• an alkylaryl group, in particular a benzyl group, optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, and/or optionally substituted on the benzylic carbon by an alkyl group, more specifically a methyl group, this carbon being eventually chiral.
• an aryl group which is optionally substituted, in particular a phenyl group optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms,
R¹ and R² optionally form an alkylene group corresponding to the formula CR³R⁴-(CH₂)ₙ-CR⁵R⁶, in which n is ranging from 0 to 4, and R³ to R⁶ are selected independently of one another, from hydrogen and alkyl groups having from 1 to 20 carbon atoms, in particular said alkylene being 1,1,5,5-tetramethylpentylene,
the carbon atom in R¹ and/or R² linked to the nitrogen atom in -NR¹R² is optionally substituted by an alkyl group having from 1 to 10 carbon atoms, in particular by a methyl group, said carbon atom being optionally chiral,
■ an arylboronic acid compound of the following formula 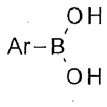 wherein Ar and B are as defined above, OH is a hydroxyl group,
■ a dialkoxyarylborane compound of the following formula 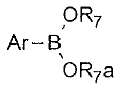 wherein Ar and B are as defined above,
-OR⁷ and -OR^{7a} are identical or different, each represents an alkoxy group, wherein R⁷ and R^{7a}, identical or different, each represents:
• a hydrogen atom,
• an optionally substituted hydrocarbon group, in particular
• a linear alkyl group having from 1 to 20 carbon atoms,
• a branched alkyl group having from 3 to 20 carbon atoms,
• a cycloalkyl group having from 3 to 20 carbon atoms,
• an alkylaryl group, in particular a benzyl group, optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, and/or optionally substituted on the benzylic carbon by an alkyl group, more specifically a methyl group, this carbon being eventually chiral.
• an aryl group which is optionally substituted, in particular a phenyl group optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms,
the alkoxy groups -OR⁷ and -OR^{7a} are optionally connected to form a ring including the boron atom and the two oxygen atoms, and more particularly a 5 to 7 membered ring derived from ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol), 2,2,-dimethylpropane-1,3-diol, the carbon atom of -OR⁷, and /or -OR^{7a} linked to the oxygen atom is optionally substituted by an alkyl group having from 1 to 10 carbon atoms, in particular by a methyl group, said carbon atom being optionally chiral,
■ an alkoxyaminoarylborane compound of following formula 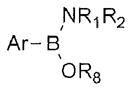 wherein Ar and B are as defined above,
• -NR¹R² is an amino group, R¹ and R² have the above mentioned meanings,
• -OR⁸ is an alkoxy group and R⁸ has the above mentioned meanings for R⁷
the alkoxy group -OR⁸ and the amino group -NR¹NR² are optionally connected to form a ring including the boron atom, and more particularly a 5 to 7 membered ring, and more particularly an oxazaborolidine ring.
the carbon atom linked to the oxygen atom in -OR⁸ and /or to the nitrogen atom in NR¹R² is optionally substituted by an alkyl group having from 1 to 10 carbon atoms, in particular by a methyl group, said carbon atom being optionally chiral,
■ a diaminoarylborane compound of following formula 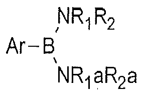 wherein Ar and B are as defined above,
NR¹R² and NR^{1a} R^{2a} is an amino group, R¹ and R² have the above mentioned meanings, R^{1a} has the same meaning as R^{1,} R^{2a} has the same meaning as R² and R¹, R², R^{1a}, R^{2a} are identical or different from one or from other(s),
the amino groups -NR¹NR² and NR^{1a} R^{2a} are optionally connected to form a ring including the boron atom, or a derivative thereof,
said compound is in particular an aminoarylborane or a cyclic diaminoarylborane or a derivative thereof.

7. Process according to any one of claims 2 to 6, comprising a step of contacting an aryl chloride of formula Ar-Cl with an aminoborane compound, wherein
Cl is a chlorine atom,
Ar is an aryl group which is optionally substituted, an heteroaryl group which is optionally substituted containing one or several heteroatom (s) selected from N, O or S, more particularly an optionally substituted aryl group or a heteroaryl group, selected from the group comprising phenyl, naphtalenyl, anthracenyl, phenanthrenyl, biphenyl, pyridine, pyrazine, imidazole, pyrazole, oxazole, isoquinoline, thiophene, benzothiophene, furane, benzofurane, isoindole, benzoxazole, benzodioxole, chromanone, each group, when substituted, is carrying one or several identical or different substituent(s), also defined as "R" selected from the group comprising:
□ - halogen atom selected from - F, -Cl, -Br or -I,
□ -SO₂-NH₂, or a salt thereof,
□ -SO₂-R⁹, or -SO₃-R⁹ wherein R⁹, represents
• a hydrogen atom,
• an optionally substituted hydrocarbon group, in particular
• a linear alkyl group having from 1 to 20 carbon atoms,
• a branched alkyl group having from 3 to 20 carbon atoms,
• a cycloalkyl group having from 3 to 20 carbon atoms,
• an alkylaryl group, in particular a benzyl group, optionally substituted on the aromatic ring by one or several substituent (s) selected from halogen, hydroxyl, alkyl group having from 1 to 10 carbon atoms, in particular from 1 to 5 carbon atoms, alkoxy group having from 1 to 10 carbon atoms, in particular from 1 to 5 carbon atoms, and/or optionally substituted on the benzylic carbon by an alkyl group, more specifically a methyl group, this carbon being eventually chiral.
• an aryl group which is optionally substituted, in particular a phenyl group optionally substituted on the aromatic ring by one or several substituent (s) selected from halogen, hydroxyl group, alkyl group having from 1 to 10 carbon atoms, in particular from 1 to 5 carbon atoms, alkoxy group having from 1 to 10 carbon atoms, in particular from 1 to 5 carbon atoms,
□ -NO₂,
□ -CF₃,
□ -CN,
□ -R¹⁰, wherein R¹⁰ has the same meanings as R⁹
□ -OR¹¹, wherein R¹¹ has the same meaning as R⁹
□ -OSi^{t}BuPh₂
□ -OSi^{t}BuMe₂
□ -SR¹², wherein R¹² has the same meaning as R⁹
□ -COOH, or -CO-NH₂ or a salt thereof,
□ -COOR¹³, wherein R¹³ has the same meaning as R⁹
□ -CO-NR¹⁴R^{14a}, wherein R¹⁴ and R^{14a} are identical or different and have the same meaning as R¹ and R^{2,} as defined in claim 6, the carbon atom in R¹⁴ and/or R^{14a} linked to the nitrogen atom, is optionally substituted by an alkyl group having from 1 to 10 carbon atoms, in particular by a methyl group, said carbon atom being optionally chiral,
□ -NR¹⁵R^{15a} or a salt thereof, wherein R¹⁵ and R^{15a} are identical of different and have the same meaning as R¹ and R² as defined in claim 6,
the carbon atom in R¹⁵ and/or R^{15a} linked to the nitrogen atom, is optionally substituted by an alkyl group having from 1 to 10 carbon atoms, in particular by a methyl group, said carbon atom being optionally chiral,
□ -SiR¹⁶₃, wherein R¹⁶ has the same meaning as R⁹
□ a borylated group in which B is a boron atom (oxidation state III) B(III), said group being in particular a dialkoxyboryl group of formula 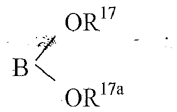
wherein OR¹⁷ and OR^{17a} represents an alkyloxy group or an acetoxy group
R¹⁷ and R^{17a}, are identical or different, each represents:
• a hydrogen atom,
• an optionally substituted hydrocarbon group, in particular
• a linear alkyl group having from 1 to 20 carbon atoms,
• a branched alkyl group having from 3 to 20 carbon atoms,
• a cycloalkyl group having from 3 to 20 carbon atoms,
• an alkylaryl group, in particular a benzyl group, optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, and/or optionally substituted on the benzylic carbon by an alkyl group, more specifically a methyl group, this carbon being eventually chiral.
• an aryl group which is optionally substituted, in particular a phenyl group optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms,
the carbon atom in OR¹⁷ and/or OR^{17a} linked to the oxygen atom, is optionally substituted by an alkyl group having from 1 to 10 carbon atoms, in particular by a methyl group, said carbon(s) atom being optionally chiral,
the alkoxy groups -OR¹⁷ and -OR^{17a} are optionally connected and form a ring including the boron atom and the two oxygen atoms, in particular a 5 to 7 membered ring derived from a diol selected from ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol,
□ a borylated group wherein B is boron atom (oxidation state IV) of formula B(IV), in particular:
■ a trifluoroborate group,
■ a trialkylborate group, -B(OR^{a})₃, wherein R^{a} is an alkyl group having from 1 to 10 carbon atoms, (OR^{a})₃ is optionally forming a bicyclic system including the boron atom and the three oxygen atoms, representing a trialkoxy moiety of a triol selected from the group comprising 1,2,3-propane triol (glycerol) or 1,1,1-tris(hydroxymethyl)ethane (2-(hydroxymethyl)-2-methyl-1,3-propanediol),
■ a boratrane group, in particular a borotrane group wherein a N,N-bis(hydroxyalkyl)alkylamine derivative of formula HO-R^{b}-NR^{c}-R^{b'}-OH forms a ring with the boron atom.
R^{b} and R^{b'}, are identical or different, each represents a linear alkylene group having 2 or 3 carbon atoms, or branched alkylene group having from 3 to 5 carbon atoms,
R^{c} is a hydrogen atom or an alkyl group having 1 to 4 carbon atoms,
in particular a N,N-bis(hydroxyalkyl)alkylamine group of formula HO-R^{b}-NR^{c}-R^{b'}-OH forming a [4,0,4], or [4,0,5] or [5,0,5] bicyclic boratrane heterocycle with the boron atom,
wherein R^{b} and R^{b'}, are identical or different, each represents a linear alkylene group having 2 or 3 carbon atoms, or branched alkylene group having from 3 to 5 carbon atoms,
R^{c} is a hydrogen atom or an alkyl group having 1 to 4 carbon atoms.
■ a methyliminodiacetic acid (MIDA) borate group of the following formula 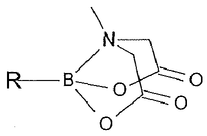
or R-MIDA wherein R is an hydrogen or optionally substituted hydrocarbon group,
the aminoborane compound to be arylated is an aminoborane of the general following formula 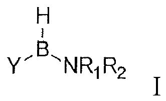 wherein
- H is a hydrogen atom,
- B is a boron atom,
-NR¹R² is an amino group, wherein
R¹ and R², are identical or different, are as defined in claim 6:
■ Y represents:
□ -H,
-NR^{1a}R^{2a},
□ -R^{7a},
□ OR^{8a} wherein
R^{1a} and R^{2a} are identical or different, and each represents:
• a hydrogen atom,
• an optionally substituted hydrocarbon group, in particular
• a linear alkyl group having from 1 to 20 carbon atoms,
• a branched alkyl group having from 3 to 20 carbon atoms,
• a cycloalkyl group having from 3 to 20 carbon atoms,
• an alkylaryl group, in particular a benzyl group, optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms,
and/or optionally substituted on the benzylic carbon by an alkyl group, more specifically a methyl group, this carbon being eventually chiral,
• an aryl group which is optionally substituted, in particular a phenyl group optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, R^{1a} and R^{2a} optionally form an alkylene group corresponding to the formula -CR³R⁴-(CH₂)ₙ-CR⁵R⁶, in which n is ranging from 0 to 4, and the R³ to R⁶ substituents are selected, independently of one another, from hydrogen and alkyl groups having from 1 to 20 carbon atoms, in particular said alkylene being 1,1,5,5-tetramethylpentylene,
the carbon atom in R^{1a} and/or in R^{2a} linked to the nitrogen atom in -NR^{1a}R^{2a} is optionally substituted by an alkyl group having from 1 to 10 carbon atoms, in particular by a methyl group, said carbon(s) atom being optionally chiral,
• R^{7a} represents
• a hydrogen atom,
• an optionally substituted hydrocarbon group, in particular
• a linear alkyl group having from 1 to 20 carbon atoms,
• a branched alkyl group having from 3 to 20 carbon atoms,
• a cycloalkyl group having from 3 to 20 carbon atoms,
• an alkylaryl group, in particular a benzyl group, optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, and/or optionally substituted on the benzylic carbon by an alkyl group, more specifically a methyl group, this carbon being eventually chiral.
• an aryl group which is optionally substituted, in particular a phenyl group optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms,
• -OR^{8a} represents an acetoxy group wherein R^{8a} has the same meaning as R^{7a},
the carbon atom in -OR^{8a} linked to the oxygen atom, is optionally substituted by an alkyl group having from 1 to 10 carbon atoms, in particular by a methyl group, said carbon atom being optionally chiral,
the carbon atom in R¹ and/or R² linked to the nitrogen atom
and/or
the carbon atom in R^{1a} and/or R^{2a} linked to the nitrogen atom,
and/or
the carbon atom in R^{8a} linked to the oxygen atom,
is optionally substituted by an alkyl group having from 1 to 10 carbon atoms, in particular by a methyl group, said carbon(s) atom being optionally chiral,
for the preparation of an aminoarylborane or an aminoheteroarylborane of following formula IV 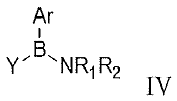
wherein Y , B, Ar and NR¹R² have meanings as defined above, or a derivative thereof.

8. Process according to any one of claims 2 to 7, comprising a step of reacting an aryl chloride of formula Ar-Cl, with an aminoborane compound wherein Ar is an aryl group, is selected from the group comprising pyridine, pyrazine, imidazole, pyrazole, oxazole, isoquinoline, thiophene, benzothiophene, furane, benzofurane, isoindole, benzoxazole, benzodioxole, and chromanone, in particular from the group comprising a benzyl and a phenyl group, preferably a phenyl group, optionally substituted with one or several substituents in particular with one to 3 substituents and more preferably with 2 or 3 substituents selected from the group comprising:
□NO₂,
□ -R⁹ in particular R⁹ is a C₁₋₁₀ alkyl
□ -OR¹¹, wherein OR¹¹ is an alkoxy group or an acetoxy group, in particular an C₁₋₁₀ alkoxy group of formula O-C₁₋₁₀ ,
□ -OSi^{t}BuPh₂ of formula 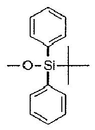
□ -OSi^{t}BuMe₂ of formula 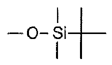
□ -SR¹², wherein -SR¹² is an alkylthio group of formula S-C₁₋₁₀,
□ CF₃,
□ CN,
□ a halogen atom selected from - F, -Cl, -Br or -I
□ an ester group of formula -COO-R¹³
□ -NR¹⁴R^{14a} or a salt thereof,
wherein,R⁹, R¹¹, R¹², R¹³, R¹⁴, R^{14a}, -OR¹¹, -NR¹⁴R^{14a} are as defined in claim 7.

9. Process according to anyone of claims 2 to 8, wherein the arylation reaction is conducted in presence of at least one base, said base being organic or inorganic and selected from the group comprising Et₃N, BuNMe₂, *i*Pr₂NEt, *i*Pr₂NH, pyridine, a mixture of organic bases, Na₂CO₃, NaOAc, K₂CO₃, Cs2CO3, KOAc, a mixture of inorganic bases.

10. Process according to any one of claims 2 to 9, for the preparation of an aminoarylborane compound which comprises:
(1) a step of reacting an aryl chloride Ar-Cl with an aminoborane compound of following formula II 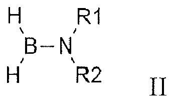 wherein Ar, B have the meanings mentioned above,
and R¹ and/or R² is an isopropyl group and when R1 or R2 is an isopropyl group, the other R1 or R2 has the following meaning:
• a hydrogen atom,
• an optionally substituted hydrocarbon group in particular
• a linear alkyl group having from 1 to 20 carbon atoms,
• a branched alkyl group having from 3 to 20 carbon atoms,
• a cycloalkyl group having from 3 to 20 carbon atoms,
• an alkylaryl group, in particular a benzyl group, optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, and/or optionally substituted on the benzylic carbon by an alkyl group, more specifically a methyl group, this carbon being eventually chiral,
• an aryl group which is optionally substituted, in particular a phenyl group optionally substituted on the aromatic ring by one or several substituent (s) selected from alkyl group having from 1 to 10 carbon atoms, in particular from 1 to 5 carbon atoms, alkoxy group having from 1 to 10 carbon atoms, in particular from 1 to 5 carbon atoms, or any aryl group substituents,
• R¹ and R² optionally form an alkylene group corresponding to the formula -CR³R⁴-(CH₂)ₙ-CR⁵R⁶, in which n is ranging from 0 to 4, and R³ to R⁶ are selected independently of one another, from hydrogen and alkyl groups having from 1 to 20 carbon atoms in particular said alkylene being 1,1,5,5-tetramethylpentylene,
the carbon atom in R¹ and/or R² linked to the nitrogen atom is optionally substituted by an alkyl group having from 1 to 10 carbon atoms, in particular by a methyl group, said carbon atom being optionally chiral,
for the preparation of an aminoarylborane compound of formula V, 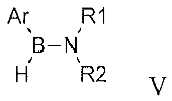 and comprises an optional step of isolation and purification of the aminoarylborane compound of formula V from the reaction medium, in particular in an aprotic and polar solvent selected from the group consisting of dioxanne, EtOAc, and tBuOMe
(2) a possible step of recovery and purification of the aminoarylborane compound of formula V from the reaction medium,
■ in particular, for the preparation of a diisopropylaminoarylborane which comprises
(1) a step of reacting an aryl chloride with the diisopropylaminoborane of following formula **II_{A}** 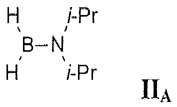
in a reaction medium containing a solvent,
for the preparation of a diisopropylaminoarylborane compound of formula **V_{A}**, 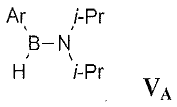 wherein Ar has the meanings mentioned in claim 7,
a possible step of recovery and purification of the diisopropylaminoarylborane compound of formula V_{A} from the reaction medium,
■ in particular for the preparation of a diisopropylaminoarylborane compound which comprises:
(1) a step of reacting an aryl chloride with the diisopropylaminoborane of following formula **II_{A}** 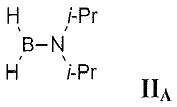 in a reaction medium containing a solvent, wherein the catalytic system is selected from the group comprising
the Pd(OAc)₂/XPhos catalytic system,
the PdCl₂/XPhos catalytic system,
the PdBr₂/XPhos catalytic system,
the PdI₂/XPhos catalytic system,
the Pd(OAc)₂/SPhos catalytic system,
the Pd(OAc)₂/DALPhos catalytic system,
a Pd(OAc)₂/NHC carbene catalytic system,
a Pd(OAc)₂/acetophenone oxime catalytic system or a Pd (PCy₃)₂ precatalyst
a Pd(OAc)₂/ PCy₃ catalytic system a Pd(OAc)₂/ AsPh₃ catalytic system,
a Pd XPhos precatalyst,
a Pd (PCy₃)₂ precatalyst
a Pd(OAc)₂/ PCy₃ catalytic system
a Pd(OAc)₂/ AsPh₃ catalytic system,
for the preparation of a diisopropylaminoarylborane compound of formula V_{A}, 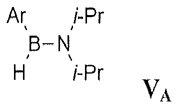 wherein Ar has the meanings mentioned in claim 7,
and a possible step of recovery and purification of the diisopropylaminoarylborane compound of formula V_{A} from the reaction medium.

11. Process according to any one of claims 2 to 10, wherein the step of reacting an aryl chloride with an aminoborane compound is performed in an aprotic polar solvent, in particular an aprotic polar solvent selected from methylacetate, ethylacetate, isopropylacetate, dioxanne, and in a mixture thereof,
at a temperature comprised from 10 °C to 120 °C, in particular comprised from 18 °C to 30 °C, preferably equal to 20 °C, during a time ranging from 1 h to 24 h, preferably from 12 h to 20 h, for the preparation of an aminoarylborane,
or wherein the step of reacting an aryl chloride with an aminoborane compound is performed in an aprotic polar solvent, in particular an aprotic polar solvent selected from methylacetate, ethylacetate, isopropylacetate, dioxanne and a mixture thereof,
at a temperature comprised from 10 °C to 120 °C, in particular comprised from 18 °C to 30 °C, preferably equal to 20 °C, during a time ranging from 1 h to 24 h, preferably from 12 h to 20 h,
and wherein said catalytic system is selected from the group comprising the Pd(OAc)₂/XPhos catalytic system,
the Pd(OAc)₂/SPhos catalytic system,
the Pd(OAc)₂/DALPhos catalytic system,
a Pd(OAc)₂/NHC carbene catalytic system or
a Pd XPhos precatalyst,
with a molar percentage of the metal relative to the aryl chloride
comprised from 0,01 % to 10 %, in particular comprised from 0,1 % to 5 %, more particularly comprised from 0,2 % to 2 %, preferably equal to 0,2 %, or about 1 %, or 2% for the preparation of an aminoarylborane compound,
or wherein the step of reacting an aryl chloride with an aminoborane compound is performed in an aprotic polar solvent, in particular an aprotic polar solvent selected from methylacetate, ethylacetate, isopropylacetate, and dioxanne, and a mixture thereof,
at a temperature comprised from 10 °C to 100 °C, in particular comprised from 18 °C to 30 °C, preferably equal to 20 °C, during a time ranging from 1 h to 24 h, preferably from 12 h to 20 h, from 16h to 18h.
and wherein said catalytic system is selected from the group comprising the Pd(OAc)₂/XPhos catalytic system,
the PdCl₂/XPhos catalytic system,
the PdBr₂/XPhos catalytic system,
the PdI₂/XPhos catalytic system,
the Pd(OAc)₂/SPhos catalytic system,
the Pd(OAc)₂/DALPhos catalytic system,
a Pd(OAc)₂/NHC carbene catalytic system,
a Pd(OAc)₂/acetophenone oxime catalytic system
or a Pd XPhos precatalyst,
with a molar percentage of the metal relative to the aryl chloride comprised from 0,01 % to 10 %, in particular comprised from 0,1 % to 5 %, more particularly comprised from 0,2 % to 2 %, preferably equal to 0,2 %, or 1 %, or 2%,
in the presence of an organic base, in particular an organic base selected from Et₃N, BuNMe₂, *i*Pr₂NEt, *i*Pr₂NH, pyridine, or an inorganic base, in particular an inorganique base selected from Na₂CO₃, NaOAc, K₂CO₃,
for the preparation of an aminoarylborane compound,
or wherein the step of reacting an aryl chloride with an aminoborane compound is performed in an aprotic polar solvent, in particular in an aprotic polar solvent selected from methylacetate, ethylacetate, isopropylacetate, and dioxanne, and a mixture thereof at a temperature comprised from 10 °C to 100 °C, in particular comprised from 18 °C to 30 °C, preferably equal to 20 °C, during a time ranging from 1 h to 24 h, preferably from 12 h to 20 h, from 16 h to 18 h.
and wherein said catalytic system, is selected from the group comprising :
the Pd(OAc)₂/XPhos catalytic system,
the PdCl₂/XPhos catalytic system,
the PdBr₂/XPhos catalytic system,
the PdI₂/XPhos catalytic system,
the Pd(OAc)₂/SPhos catalytic system,
the Pd(OAc)₂/DALPhos catalytic system,
a Pd(OAc)₂/NHC carbene catalytic system,
a Pd(OAc)₂/acetophenone oxime catalytic system or
a Pd XPhos precatalyst,
with a molar percentage of the metal relative to the aryl chloride comprised from 0,01 % to 10 %, in particular comprised from 0,1 % to 5 %, more particularly comprised from 0,2 % to 2 %, preferably equal to 0,2 %, or 1 %, or 2%,
in the presence of an organic base, in particular an organic base selected from Et₃N, BuNMe₂, *i*Pr₂NEt, *i*Pr₂NH, pyridine, or an inorganic base, in particular an inorganic base selected from Na₂CO₃, NaOAc, K₂CO₃,
and in the presence of a halide salt, in particular in the presence of 0,001 % to 50 %, in particular from 0,01 % to 20 %, and even more particularly from 0.1% to 20 or from 0.1 to 5% of said halide salt expressed as a percentage of the number of moles of the aryl chloride (molar percentage) in the arylation reaction, said halide salt being in particular selected from KI, NaI, CsI, KBr, NaBr, CsBr, KCl, NaCl, CsCl, NH₄I, NH₄Br, NH₄Cl, more particularly KI or NaI,
for the preparation of an aminoarylborane compound.

12. Process according to any one of claims 2 to 11, wherein the step (2) of converting an aminoarylborane compound into a aminoarylborane compound derivative comprises a treatment of said aminoarylborane compound by alcoholysis with an alcohol, in particular with methanol,
optionally followed by a transesterification with a second alcohol, preferably with a diol selected from the group comprising ethane-1,2-diol, propane-1,3-diol, 2,3-dimethylbutane-2,3-diol (pinacol), pinanediol, 2-methylbutane-2,3-diol, 1,2-diphenylethane-1,2-diol, 2-methylpentane-2,4-diol, 1,2-dihydroxybenzene (catechol), in particular pinacol or pinanediol, for the preparation of an arylboronic ester of the following formula **VI** 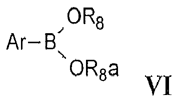 wherein R⁸, R^{8a} and Ar have the meanings mentioned in claim 7,
in particular for the preparation of a cyclic aryldialkoxyborane,
preferably for the preparation of an arylpinacolborane of the following formula **VIA** 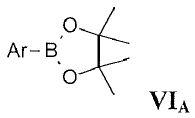 wherein Ar has the above mentioned meanings,
• or said treatment comprises a hydrolysis treatment to obtain an arylboronic acid of formula **VII** 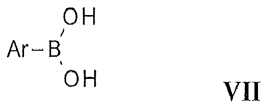
wherein Ar and B have the meanings or Ar and B in claim 7.

13. Process according to any one of claims 2 to 12, for the preparation of diisopropylaminoarylborane of formula selected from : 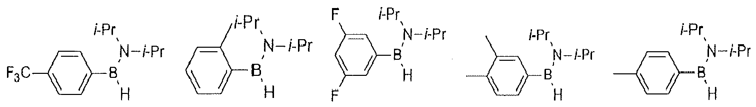 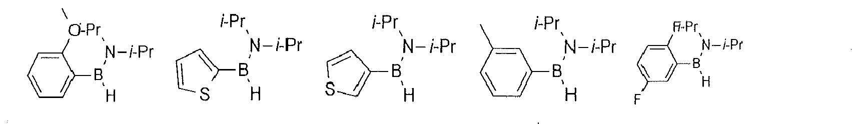 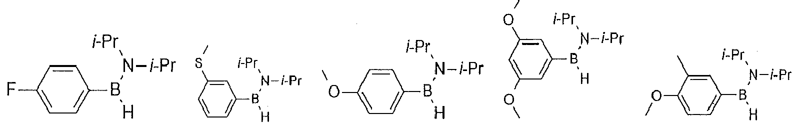 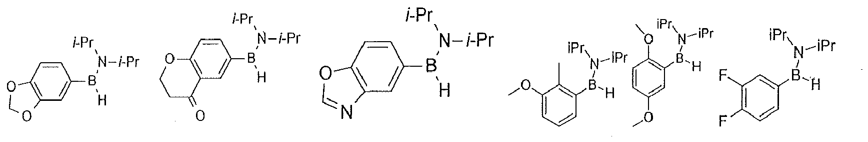 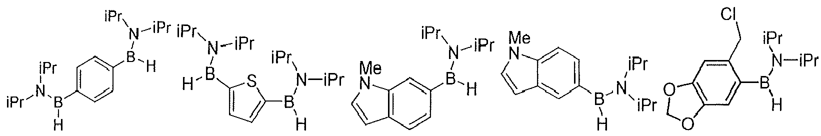 and 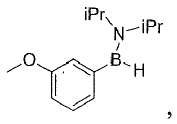 wherein said diisopropylaminoborane is optionally isolated and purified.

14. Process according to claim 13, which comprises in addition to step (1) of contacting an aryl chloride with a diisopropylaminoborane compound of following formula **II_{A}** 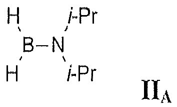 in a reaction medium containing a solvent,
a step (2) of converting said diisopropylaminoborane compound of formula **II_{A}** into a diisopropylaminoborane compound of formula **II_{A}** derivative,
wherein step (2) is a step of treating said aminoarylborane of formula **V_{A}** obtained at step (1) or after an optional phase of recovery and purification, by alcoholysis, preferably a treatment with methanol, followed by a transesterification with pinacol.

15. Process according to claim 14 for the preparation of an arylpinacolborane having one of the following formulae: 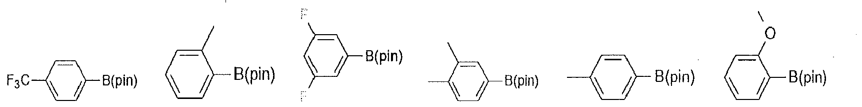 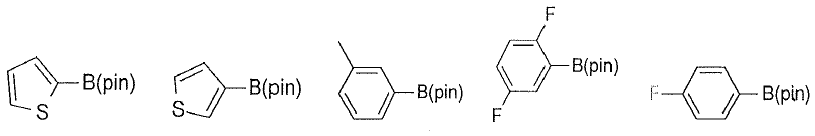 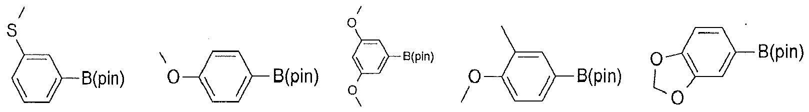 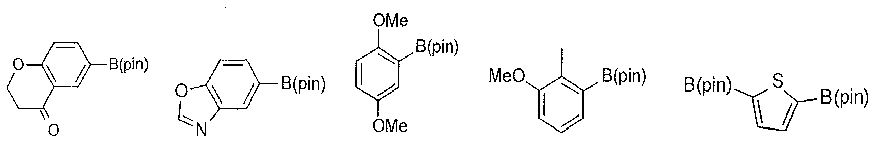 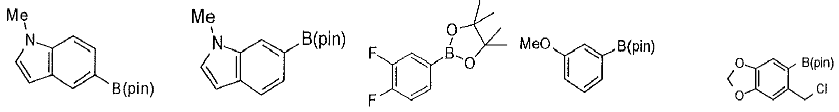 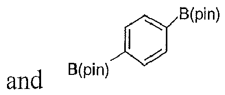 wherein -B(pin) represents:
